# EUROPÄISCHE PATENTSCHRIFT

(11) **EP 0 944 661 B1**
(45) Veröffentlichungstag und Bekanntmachung des Hinweises auf die Patenterteilung: **28.03.2001**
(21) Anmeldenummer: 97954345.1
(22) Anmeldetag: 12.12.1997
(51) Int. Cl.: C08G 18/34, C08K 5/11, C08L 75/04, C08J 9/00

(54) **INNERE FORMTRENNMITTEL ZUR HERSTELLUNG VON SELBSTTRENNENDEN FORMKÖRPERN AUS POLYISOCYANAT-POLYADDITIONSPRODUKTEN**
INNER PARTING AGENTS FOR PRODUCING SELF-PARTING MOULDINGS MADE OF POLYISOCYANATE POLYADDITION PRODUCTS
AGENTS INTERNES DE DEMOULAGE UTILES POUR PRODUIRE DES CORPS MOULES AUTO-DEMOULABLES EN PRODUITS DE POLYADDITION DE POLYISOCYANATES

(30) Priorität: 13.12.1996 DE 19651994
(43) Veröffentlichungstag der Anmeldung: 29.09.1999
(73) Patentinhaber: BASF AKTIENGESELLSCHAFT, 67056 Ludwigshafen (DE)
(72) Erfinder: HORN, Peter, D-69118 Heidelberg (DE); SCHERZER, Dietrich, D-67433 Neustadt (DE); HÄBERLE, Karl, D-67346 Speyer (DE); TREULING, Ulrich, D-64625 Bensheim (DE); PARTUSCH, Georg, D-86932 Puergen (DE); TÄNNY, Günter, D-67583 Guntersblum (DE); KISTENMACHER, Axel, D-67061 Ludwigshafen (DE)
(86) Internationale Anmeldenummer: EP9706713
(87) Internationale Veröffentlichungsnummer: WO9825985

(56) Entgegenhaltungen:
- EP-A- 0 445 614
- WO-A-95/06673

## Beschreibung

Gegenstände der Erfindung sind ein Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) gegebenenfalls modifizierten organischen Polyisocyanaten mit
b) Verbindungen mit mindestens zwei reaktiven Wasserstoffatomen und einem Molekulargewicht von 62 bis 10000 und gegebenenfalls
c) Kettenverlängerungs- und/oder Vernetzungsmitteln
   in Gegenwart von
d) inneren Formtrennmitteln
und in Gegenwart oder Abwesenheit von
e) Katalysatoren,
f) Treibmitteln,
g) Verstärkungsmitteln und
h) Hilfsmitteln
in einem offenen oder geschlossenen Formwerkzeug, wobei als innere Formtrennmittel (d) Alkylbernsteinsäureester und/oder -halbester und/oder Alkenylbernsteinsäureester und/oder -halbester verwendet werden,
und die Verwendung der Alkyl- und/oder Alkenylbernsteinsäureester oder -halbester als innere Formtrennmittel für Formkörper aus Polyisocyanat-Polyadditionsprodukten.

Die Herstellung von Formkörpern aus kompakten oder zelligen, gegebenenfalls Verstärkungsmittel enthaltenden Polyisocyanat-Polyadditionsprodukten wie z.B. kompakten oder zelligen, Urethan- und/oder Harnstoffgruppen enthaltenden Elastomeren, sogenannten Polyurethan(PU)-Elastomeren und flexiblen, halbharten oder harten Urethan-, Urethan- und Harnstoffgruppen und gegebenenfalls Isocyanuratgruppen aufweisenden Schaumstoffen, sogenannten PU- oder Polyisocyanurat(PIR)-Schaumstoffen, durch Umsetzung von organischen und/oder modifizierten organischen Polyisocyanaten mit höhermolekularen Verbindungen mit mindestens zwei reaktiven Wasserstoffatomen, z.B. Polyoxyalkylen-polyaminen und/oder vorzugsweise organischen Polyhydroxylverbindungen mit Molekulargewichten von z.B. 500 bis 12.000 und gegebenenfalls niedermolekularen Kettenverlängerungs- und/oder Vernetzungsmitteln in Gegenwart oder Abwesenheit von Katalysatoren, Treibmitteln, Hilfsmitteln und/oder Zusatzstoffen in einem offenen oder geschlossenen Formwerkzeug ist bekannt aus zahlreichen Patent- und Literaturveröffentlichungen. Durch geeignete Wahl der Aufbaukomponenten, z.B. den organischen Polyisocyanaten, den höhermolekularen Verbindungen die mit NCO-Gruppen reaktive Wasserstoffatomen enthalten und gegebenenfalls Kettenverlängerungsmitteln und/oder Vernetzungsmitteln können nach dieser Verfahrensweise elastische oder starre, kompakte oder zellige Formkörper aus Polyisocyanat-Polyadditionsprodukten sowie alle dazwischen liegenden Modifikationen hergestellt werden.

Eine Übersicht über die Herstellung von Formkörpern aus beispielsweise zelligen oder kompakten PU-Gießelastomeren, PU-Elastomeren, PU-Schaumstoffen, PIR-Schaumstoffen u.a., ihre mechanischen Eigenschaften und ihre Verwendung wird z.B. im Kunststoff-Handbuch, Band VII, "Polyurethane", 1. Auflage, 1966, herausgegeben von Dr. R. Vieweg und Dr. A. Höchtlen, 2. Auflage, 1983, herausgegeben von Dr. G. Oertel und 3. Auflage, 1993, herausgegeben von Dr. G.W. Becker und Dr. D. Braun (Carl-Hanser-Verlag, München, Wien) und "Integralschaumstoffe", herausgegeben von Dr. H. Piechota und Dr. H. Rohr (Carl-Hanser-Verlag, München, Wien, 1975) gegeben.

Obgleich die Herstellung von kompakten oder zelligen, elastischen oder starren PU- oder PIR-Formkörpern eine außerordentliche technische Bedeutung erlangt hat, weisen die beschriebenen Verfahren, z.B. wegen der hervorragenden Adhäsion von Polyurethanen zu anderen Werkstoffen, auch technische Mängel auf. Nachteilig ist insbesondere, daß die PU-Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte, metallische Formwerkzeuge verwendet und/oder die Formwerkzeuginnenflächen werden vor der Herstellung der Formkörper mit einem äußeren Trennmittel, beispielsweise einem Produkt auf Wachs-, Seifen- oder Ölbasis oder einem Silikonöl eingesprüht. Diese Methode ist nicht nur zeit- und kostenaufwendig, sondern kann auch, insbesondere bei silikonhaltigen Trennmitteln, zu erheblichen Lackierproblemen führen.

Zur Verbesserung der selbsttrennenden Eigenschaften bei der Herstellung von PU-Formkörpern, insbesondere PU-Polyharnstoff(PH)-Formkörpern nach der RIM-Technik, wurden sogenannte "innere" Formtrennmittel entwickelt.

Nach Angaben der EP-A-0 153 639 (US-A-4 581 387) werden zur Herstellung von PU-PH-Formkörpern nach der RIM-Technik als innere Trennmittel Carbonsäureester und/oder Carbonsäureamide verwendet, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

Nach Angaben der US-A-4 519 965 finden als innere Formtrennmittel bei der Reaktionsspritzgußtechnik Mischungen Verwendung aus einem Zinkcarboxylat mit 8 bis 24 Kohlenstoffatomen im Carboxylrest und Stickstoff enthaltenden, mit Isocyanatgruppen reagierenden Polymeren zur Verbesserung der Verträglichkeit des Zinkcarboxylats mit den Aufbaukomponenten zur Polyurethan-Polyharnstoff-Herstellung.

In der EP-A-0 255 905 (US-A-4 766 172) wird eine Trennmittelzusammensetzung und ein Verfahren zur Herstellung von elastischen Formkörpern beschrieben, die besteht aus einer bei Raumtemperatur flüssigen Lösung eines Zinksalzes einer höheren aliphatischen Carbonsäure in ausgewählten tertiären Aminoverbindungen der Formel R¹R²N(CH₂)ₘNR(CH₂)ₙNR³R⁴.

Nach den Angaben der DE-A-36 31 842 (US-A-4 764 537) enthalten innere Formtrennmittel zur Herstellung von Formkörpern nach dem Polyisocyanat-Polyadditionsverfahren mindestens ein Ketimin, Aldimin, Enamin und/oder eine cyclische Schiff'sche Base, mindestens ein Metallsalz einer organischen Carbonsäure mit 8 bis 24 C-Atomen und mindestens eine organische Carbonsäure, organische Sulfonsäure, Mineralsäure oder Amidosulfonsäure. Diese Trennmittelzusammensetzungen zeigen bei Urethan- und Harnstoffgruppen enthaltenden, im wesentlichen kompakten Formkörpern und harten Polyurethan-Integralschaumstoffen, hergestellt nach der RIM-Technik, hervorragende Trenneigenschaften.

Nachteilig ist lediglich, daß die unter Verwendung von Kettenverlängerungsmitteln auf der Grundlage von niedermolekularen mehrwertigen Alkoholen und/oder Polyoxyalkylen-polyolen hergestellten Urethangruppen enthaltenden Formkörper relativ langsam durchhärten und vor der Lackierung zur Entfettung mit 1,1,3-Trichlorethandampf behandelt werden müssen.

Zur Beseitigung dieses Nachteils werden zur Herstellung von elastischen, im wesentlichen kompakten Polyurethan-Formkörpern nach den Angaben der EP-B-0 262 378 und DE-A-39 04 810 und zur Herstellung von Urethangruppen enthaltenden, weichelastischen Formkörpern mit einer verdichteten Randzone und einem zelligen Kern nach DE-A-39 04 812 als inneres Formtrennmittel verwendet eine Mischung aus mindestens einem organischen Amin und mindestens einem Metallsalz der Stearinsäure bzw. eine Mischung aus mindestens einem organischen Amin, mindestens einem Ketimin und mindestens einem Metallsalz der Stearinsäure in Verbindung mit mindestens einer organischen Mono- und/oder Dicarbonsäure oder deren Anhydride. Vorteilhaft an diesen Verfahren ist, daß die hergestellten PU-Formkörper keiner Oberflächenbehandlung mit 1,1,3-Trichlorethandampf bedürfen. Nachteilig ist jedoch, daß großflächige Formkörper, insbesondere solche mit komplizierten Raumformen, nur schwer hergestellt werden können, da der Fließweg der Reaktionsmischung relativ kurz ist, so daß großvolumige Formwerkzeuge, insbesondere solche mit dünnen Hohlräumen und engen Durchflüssen, vielfach nur unzureichend oder an bestimmten Stellen überhaupt nicht gefüllt werden.

Für eine Auswahl des jeweils optimalen Trennmittels bedarf es üblicherweise nicht nur der Kenntnis der Ausgangsstoffe der PU-bzw. PU-PH-Formulierung, z.B. der Gegenwart oder Abwesenheit von Zinkstearat, sterisch gehinderten aromatischen Diaminen, Polyoxyalkylen-polyaminen, Treibmitteln u.a., sondern auch der Art des Formwerkzeugmaterials, dessen Oberflächenbeschaffenheit und der Formwerkzeuggeometrie sowie der Anordnung der Füllöffnungen. In den meisten Fällen bedarf die Wahl des besten Trennmittels einer experimentellen Optimierung.

Weitere andere äußere und/oder innere Formtrennmittel zur Herstellung von PU-Schaumstoffen werden z.B. beschrieben in der EP 0 533 018 B1, DE-A-19 53 637, DE-A-21 21 670, DE-B-23 07 589, DE-A-23 56 692, DE-A-23 63 452, DE-A-24 04 310, DE-A-24 27 273, DE-A-24 31 968 sowie zur Herstellung von PU-Formkörpern mit einer Dichte im Bereich von 0,8 bis 1,4 g/cm³ in der EP-A-0 265 781. Trotz dieser Vielzahl bekannter Methoden konnte die Problematik der Selbsttrennung von PU- bzw. PU-PH-Formkörpern nicht abschließend gelöst werden. Häufig ist die Trennwirkung der verwendeten Formtrennmittel unzureichend und/oder die Lagerstabilität der Trennmittel enthaltenden Polyolkomponente nicht gewährleistet.

Alkyl- und Alkenylbernsteinsäuren fanden bereits zur Herstellung von Polyisocyanat-Polyadditionsprodukten Verwendung. Nach Angaben der EP-A-666 880 (WO 95/06673) eignen sich Alkalimetall- und Erdalkalimetallsalze von Alkyl- und Alkenylbernsteinsäuren als Katalysatoren zur Herstellung von Polyurethanen und/oder Polyharnstoffen, insbesondere von Schaumstoffen aus solchen Polyadditionsprodukten, da sie die Zellstruktur derselben vorteilhaft zu beeinflussen vermögen.

Die Aufgabe der vorliegenden Erfindung bestand darin, innere Formtrennmittel mit einem breiten Anwendungsspektrum zu entwickeln, die sowohl zur Herstellung von kompakten als auch zelligen Formkörpern aus Polyisocyanat-Polyadditionsprodukten, wie z.B. Urethan- und/oder Harnstoff- und/oder Isocyanuratgruppen enthaltenden Polyadditionsprodukten, geeignet sind. Die trennmittelhaltigen Polyolkomponenten (A-Komponenten) sollten lagerbeständig sein und nach einem wirtschaftlichen, umweltfreundlichen Verfahren zu kompakten oder zelligen, vorzugsweise großflächigen und/oder großvolumigen, gegebenenfalls Verstärkungsmittel enthaltenden Formkörpern oder Formkörpern mit einer im wesentlichen kompakten Randzone und einem zelligen Kern, sogenannten Integralschaumstoffen, verarbeitet werden können.

Sofern die erhaltenen Formkörper lackiert werden, sollte auf eine Vorbehandlung mit organischen Lösungsmitteln, insbesondere halogenhaltigen Lösungsmitteln, zweckmäßigerweise vollständig verzichtet werden können.

Diese Aufgabe konnte überraschenderweise durch die Verwendung von Alkyl- und/oder Alkenylbernsteinsäureestern und/oder -halbestern als innere Trennmittel zur Herstellung der Formkörper aus Polyisocyanat-Polyadditionsprodukten gelöst werden.

Gegenstand der Erfindung ist somit ein Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) organischen und/oder modifizierten organischen Polyisocyanaten mit
b) mindestens einer Verbindung mit mindestens zwei reaktiven Wasserstoffatomen und einem Molekulargewicht von 62 bis 10000 und gegebenenfalls
c) Kettenverlängerungs- und/oder Vernetzungsmitteln
   in Gegenwart von
und in Gegenwart oder Abwesenheit von
d) inneren Formtrennmitteln
e) Katalysatoren,
f) Treibmitteln,
g) Verstärkungsmitteln und
h) Hilfsmitteln
in einem offenen oder geschlossenen Formwerkzeug, gegebenenfalls unter Verdichtung, das dadurch gekennzeichnet ist, daß man als innere Formtrennmittel Alkylbernsteinsäureester und/oder -halbester und/oder Alkenylbernsteinsäureester und/oder -halbester verwendet.

Ein anderer Gegenstand der Erfindung ist die Verwendung der Alkylbernsteinsäureester oder -halbester und Alkenylbernsteinsäureester und/oder -halbester, vorzugsweise ausgewählt aus der Gruppe der Alkyl- und Alkenylbernsteinsäureester, -halbester, Poly(alkylbernsteinsäure)- und Poly(alkenylbernsteinsäure)-polyester oder Mischungen aus Alkylbernsteinsäureestern und/oder -halbestern und/oder Alkenylbernsteinsäureester und/oder -halbestern und/oder Alkylbernsteinsäureamiden und/oder -imiden und/oder Alkenylbernsteinsäureamiden und/oder -imiden als innere Formtrennmittel für die Herstellung von Formkörpern aus Polyisocyanat-Polyadditionsprodukten.

Die erfindungsgemäß verwendbaren inneren Trennmittel sind metallionenfrei, leicht mit den übrigen Komponenten der Polyolkomponente (A-Komponente) mischbar und aufgrund der guten Löslichkeit sehr gut lagerbeständig. Ausgewählte erfindungsgemäße innere Trennmittel sind auch in der B-Komponente löslich. Bevorzugt werden der B-Komponente solche zugesetzt, welche - wie später ausgeführt - Ausgangssubstanzen der erfindungsgemäßen Trennmittel sind. Die Alkyl- und insbesondere Alkenylbernsteinsäureester und/oder -halbester zeigen im wesentlichen unabhängig von der Zusammensetzung der Polyolkomponente eine beträchtlich verbesserte Trennwirkung bei der Formkörperherstellung. Aufgrund des breiten Verwendungsspektrums bezüglich der einzelnen PU-Systeme können mit den neuen Trennmitteln gleichermaßen kompakte oder zellige, verstärkungsmittelfreie oder Verstärkungsmittel enthaltende, Urethan-, Harnstoff-, Urethan- und Harnstoffgruppen sowie gegebenenfalls Isocyanuratgruppen enthaltende Formkörper hergestellt werden.
Zu den Aufbaukomponenten (a) bis (h) zur Herstellung der kompakten oder zelligen Polyisocyanat-Polyadditionsprodukte und insbesondere zu den erfindungsgemäß verwendbaren inneren Formtrennmitteln (d) und den Ausgangsstoffen zu ihrer Herstellung ist folgendes auszuführen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate wie z.B. m-, p-Xylylen-diisocyanat und Xylylen-diisocyanat-Isomerenmischungen und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI), Mischungen aus Roh-MDI und Toluylen-diisocyanaten, 1,4-und 1,5-Naphthylen-diisocyanat, 3,3'-Dimethyl-diphenyl-4,4'-diisocyanat, 1,2-Diphenylethan-diisocyanat und Phenylendiisocyanat. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Urethonimin- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Alkanoldiolen, Triolen, Dialkylenglykolen, Trialkylenglykolen oder Polyoxyalkylenglykolen mit Molekulargewichten bis 6.000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/ oder -tetrole. Geeignet sind auch NCO-Gruppen enthaltende Prepolymere mit NCO-Gehalten von 14 bis 1,5 Gew.-%, vorzugsweise von 8 bis 2,5 Gew.-%, bezogen auf das Gesamtgewicht, hergestellt aus den nachfolgend beschriebenen Polyester- und/oder vorzugsweise Polyether-polyolen und 1,4- und 1,5-Naphthylen-diisocyanat, 3,3'-Dimethyl-diphenyl-4,4'-diisocyanat, 1,2-Diphenylethan-diisocyanat, Phenylendiisocyanat und 4,4'-Diphenylmethan-diisocyanat, Mischungen aus 2,4'- und 4,4'-Diphenylmethan-diisocyanat, 2,4- und/oder 2,6-Toluylendiisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 14 bis 9 Gew.-%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als Verbindungen b) mit mindestens zwei reaktiven Wasserstoffatomen werden zweckmäßigerweise solche mit einer Funktionalität von 1 bis 8, vorzugsweise 2 bis 6 und einem Molekulargewicht von 500 bis 9.000 verwendet. Bewährt haben sich z.B. Polyether-polyamine und/oder vorzugsweise Polyole ausgewählt aus der Gruppe der Polyether-polyole, Polyester-polyole, Polythioether-polyole, hydroxylgruppenhaltigen Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechende Dicarbonsäurederivate, wie z.B. Dicarbonsäure- mono- und -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Zur Herstellung foggingarmer PU-Formkörper werden die Polyester-polyole vor ihrer Verwendung zweckmäßigerweise einer Destillation bei Temperaturen von 140 bis 280°C und unter vermindertem Druck von 0,05 bis 30 mbar, z.B. einer Dünnschichtdestillation, zur Abtrennung flüchtiger Bestandteile unterworfen.
   Die erhaltenen Polyester-polyole besitzen vorzugsweise eine Funktionalität von 1 bis 4, insbesondere 2 bis 3 und ein Molekulargewicht von 500 bis 3.000, vorzugsweise 1.200 bis 3.000 und insbesondere 1.800 bis 2.500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2--, 1,3-, 1,4-, 1,5- und 1,6-Hexamethylendiamin, Phenylendiamine, 2,3-, 2,4, 3,4- und 2,6-Toluylendiamin und 4,4'-, 2,4'- und 2,2'-Diamino-diphenylmethan, N,N-Dimethylamino-dipropylentriamin, N,N-Dimethylaminopropandiamin(1,3).
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen zur Herstellung von flexiblen Formkörpern eine Funktionalität von vorzugsweise 2 bis 3 und insbesondere 2 bis 2,6 und Molekulargewichte von 1.800 bis 9.000, vorzugsweise 2.000 bis 6.500 und insbesondere 2.400 bis 5.200 und zur Herstellung von steifen, harten Formkörpern eine Funktionalität von vorzugsweise 3 bis 8, insbesondere 3 bis 6 und Molekulargewichte von 500 bis 2.400, vorzugsweise 600 bis 1.800 und insbesondere 600 bis 1500 und geeignete Polyoxytetramethylenglykole ein Molekulargewicht bis ungefähr 3.500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708),
   US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solch der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).
c) Die Polyisocyanat-Polyadditionsprodukte können ohne oder unter Mitverwendung von difunktionellen Kettenverlängerungs- und/oder tri- und höherfunktionellen Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Zur Herstellung von kompakten und zelligen PU- oder PU-PH-Elastomeren, thermoplastischen Polyurethanen und flexiblen, weichelastischen PU-Schaumstoffen werden zweckmäßigerweise Kettenverlängerungsmittel und gegebenenfalls Vernetzungsmittel mitverwendet. Als Kettenverlängerungs- und/oder Vernetzungsmittel verwendet werden Diole und/oder Triole mit Molekulargewichten kleiner als 500, vorzugsweise von 60 bis 300. In Betracht kommen beispielsweise Dialkylenglykole und aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung zelliger Polyurethan(PU)-Polyharnstoff(PH)Elastomerer können neben den obengenannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3'-, 5,5'-tetraalkylsubstituierte Diamino-diphenylmethane Anwendung finden. Als sek. aromatische Diamine seinen beispielhaft genannt:
   N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Di-cyclohexyl-p-bzw. -m-Phenylendiamin, N,N'-Dimethyl-, N,N'-Diethyl-,N,N'-Diisopropyl-, N,N'-Di-sek-butyl-, N,N'-Dicyclohexyl-4,4'-diaminodiphenylmethan und N,N'-Di-Sek-butyl-benzidin.
   Als aromatische Diamine werden zweckmäßigerweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich z.B. alkylsubstituierte meta-Phenylendiamine der Formeln 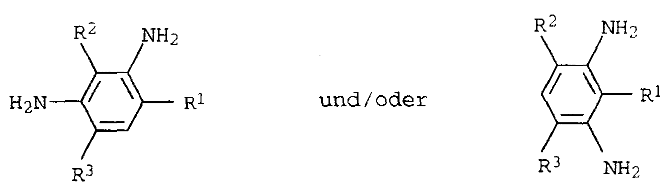 in den R³ und R² gleich oder verschieden sind und einen Methyl-, Ethyl-, Propyl- und Isopropylrest bedeuten und R¹ ein linearer oder verzweigter Alkylrest mit 1 bis 10, vorzugsweise 4 bis 6 Kohlenstoffatomen ist.
   Insbesondere bewährt haben sich solche Alkylreste R¹, bei denen die Verzweigungsstelle am C¹-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethyl-phenylen-diamin-1,3. Vorzugsweise verwendet werden 1-Methyl-3,5-diethyl-2,4- bzw. -2,6-phenylendiamine, 2,4-Dimethyl-6-tert.-butyl-, 2,4-Dimethyl-6-isooctyl- und 2,4-Dimethyl-6-cyclohexyl-m-phenylen-diamin-1,3.
   Geeignete 3,3'-di- und 3,3',5,5'-tetra-n-alkylsubstituierte 4,4'-Diaminodiphenylmethane sind beispielsweise 3,3'-Di-, 3,3',5,5'-Tetramethyl-, 3,3'-Di-, 3,3',5,5'-Tetraethyl-, 3,3'-Di- und 3,3',5,5'-Tetra-n-propyl-4,4'-diaminodiphenylmethan.
   Vorzugsweise verwendet werden Diamino-diphenylmethane der Formel 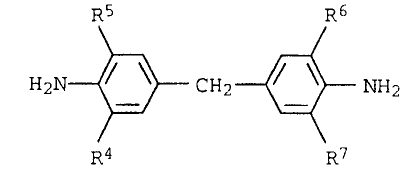 in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln 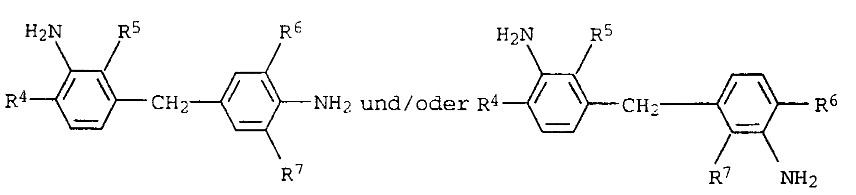 verwendet werden, wobei R⁴, R⁵, R⁶ und R⁷ die obengenannte Bedeutung haben.
   Vorzugsweise verwendet werden 3,5-Dimethyl-3',5'-diisopropyl- und 3,3',5,5'-Tetraisopropyl-4,4'-diamino-diphenylmethan. Die Diamino-di-phenylmethane können einzeln oder in Form von Mischungen eingesetzt werden.
   Die genannten Kettenverlängerungsmittel und/oder Vernetzungsmittel (c) können einzeln oder als Mischungen von gleichen oder verschiedenen Verbindungsarten verwendet werden.
   Sofern Kettenverlängerungs, Vernetzungsmittel oder Mischungen davon Anwendung finden, kommen diese zweckmäßigerweise in Mengen von 2 bis 60 Gew.-%, vorzugsweise 8 bis 50 Gew.-% und insbesondere 10 bis 40 Gew.-%, bezogen auf das Gewicht der Komponente (b) zum Einsatz.
(d) Erfindungsgemäß finden als innere Formtrennmittel (d) Alkylbernsteinsäureester, Alkenylbernsteinsäureester, Alkylbernsteinsäurehalbester und Alkenylbernsteinsäurehalbester oder Mischungen aus diesen Estern und -Halbestern Verwendung. Die Alkyl- oder vorzugsweise Alkenylgruppen können linear oder vorzugsweise verzweigtkettig sein und besitzen vorteilhafterweise ein mittleres Molekulargewicht Mₙ (Zahlenmittelwert) von 250 bis 3.000, vorzugsweise von 800 bis 2.300 und insbesondere von 900 bis 1.400. Die Alkylgruppen bestehen vorzugsweise aus Polyethylen-, Polyisopropylen- und Polyisobutylenresten und die Alkenylgruppen vorzugsweise aus Polyphenyl-, Polyisopropenyl- und insbesondere Polyisobutenylresten.
   Die Alkyl- oder Alkenylbernsteinsäureester oder -halbester können hergestellt werden nach bekannten Verfahren, wie z.B. durch Umsetzung von Alkyl- oder Alkenylbernsteinsäure und/ oder den entsprechenden Alkyl- oder Alkenylbernsteinsäurederivaten, wie z.B. -mono- und/oder -dichloride und insbesondere -anhydride mit primären und/oder sekundären organischen, vorzugsweise aliphatischen und/oder cycloaliphatischen Mono- und/oder Polyalkoholen. Nach einer bevorzugten Ausführungsform werden die Alkyl- oder Alkenylbernsteinsäureester hergestellt durch Umsetzung der Alkyl- oder Alkenylbernsteinsäureanhydride mit primären und/oder sekundären, aliphatischen und/oder cycloaliphatischen Mono- und/oder Polyolen gegebenfalls auch im Gemisch mit Alkylbernsteinsäureamiden und/oder -imiden und/oder Alkenylbernsteinsäureamiden und/oder -imiden.
   Als Aufbaukomponenten zur Herstellung der Alkyl- oder Alkenylbernsteinsäureester oder -halbester werden vorzugsweise Alkyl- oder Alkenylbernsteinsäureanhydride verwendet, wie sie beispielsweise in der EP-A-666 880 (WO 94 00 937), DE-A-28 08 105 (US-A-4,234,435) EP-A-0 632 071 (US-A-5 420 207) oder EP-A-0 629 638 beschrieben werden. Geeignete Ausgangsstoffe sind jedoch auch Alkyl- oder Alkenylbernsteinsäuren und -säurederivate, z.B. Alkyl- oder, -mono- und/oder dihalogenide und vorzugsweise -anhydride, wie sie z.B. in der EP-A-0 457 599 beschrieben werden, Homopolymere aus polyalkenylsubstituierter Bernsteinsäure oder -derivaten, vorzugsweise -anhydriden, Copolymere aus den vorgenannten polyalkenylsubstituierten Bernsteinsäuren und/oder Bernsteinsäurederivaten und olefinisch ungesättigten Monomeren mit 2 bis 30 C-Atomen und Copolymere aus Maleinsäureanhydrid, Polyisoalkenen, vorzugsweise Polyisopropen und insbesondere Polyisobuten und olefinisch ungesättigten Monomeren mit 2 bis 30 C-Atomen, vorzugsweise 18 bis 24 C-Atomen. Geeignete polymere Substanzen als Aufbaukomponenten für die erfindungsgemäßen Trennmittel sind auch beschrieben in WO 90/03359. Die dort beschriebenen Substanzen können wie in WO 90/03359 zu Imiden, Amiden, Estern oder Halbestern umgesetzt werden.
   Die Herstellung und Aufarbeitung von geeignetem Polyisobutylen ist beispielsweise in EP-A-628 575 beschrieben.
   In der DE-A-28 08 105 (US-A-4,234,435) werden die zur Herstellung der erfindungsgemäß verwendeten inneren Trennmittel verwendeten Ausgangskomponenten sowie die Herstellung und die Nachbehandlung der als innere Trennmittel einsatzbaren Verbindungen sowie ihre Eignung als Schmierölzusätze für Mineralöle beschrieben.
   Eine weitere Gruppe von Bernsteinsäurederivaten, die zu den erfindungsgemäß verwendbaren inneren Trennmitteln umgesetzt werden kann, ist in WO 95/07944 beschrieben. Dabei handelt es sich um Copolymerisate aus
   a) 20 bis 60 mol-% Maleinsäure oder Maleinsäureanhydrid,
   b) 10 bis 70 mol-% mindestens eines Oligomeren des Propens oder eines verzweigten 1-Olefins mit 4 bis 10 Kohlenstoffatomen und einem mittleren Molekulargewicht M_{w} von 300 bis 5000 und
   c) 1 bis 50 mol-% mindestens einer monoethylenisch ungesättigten Verbindung, die mit den Monomeren a) und b) copolymerisierbar ist.

   Als Monomer c) werden verwendet
   - monoethylenisch ungesättigte C₃-C₁₀-Monocarbonsäuren
   - lineare 1-Olefine mit 2 bis 40 Kohlenstoffatomen
   - Vinyl- und Alkylallylether mit 1 bis 40 Kohlenstoffatomen im Alkylrest.

   Es ist prinzipiell auch möglich, Maleinsäuren und Maleinsäureanhydrid teilweise oder ganz durch andere olefinisch ungesättigte Carbonsäuren zu ersetzen. Auf Grund der besseren Verfügbarkeit und der besseren Verarbeitbarkeit wird jedoch üblicherweise Maleinsäure und/oder Maleinsäureanhydrid eingesetzt.
   Als Alkohole für die Herstellung der erfindungsgemäß verwendeten inneren Trennmittel eignen sich demzufolge solche der allgemeinen Formel (im folgenden als Komponente A bezeichnet)

   R³(̵OH)ₘ (X)

   in der R³ ein einwertiger oder mehrwertiger organischer Rest der Struktur Y 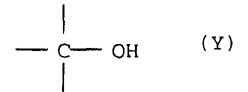 ist, der durch C-O-Bindungen an die OH-Gruppen gebunden ist wobei das Kohlenstoffatom nicht Bestandteil einer Carbonylgruppe ist und m eine ganze Zahl von 1 bis etwa 16, vorzugsweise 2 bis 6, ist. Die Alkohole können aliphatisch, cycloaliphatisch, aromatisch oder heterocyclisch sein, z.B. aliphatisch-substituierte heterocyclische, cycloaliphatisch-substituierte aromatische, cycloaliphatisch-substituierte heterocyclische, heterocyclisch-substituierte aliphatische, heterocyclisch-substituierte cycloaliphatische und heterocyclisch-substituierte aromatische Alkohole. Mit Ausnahme der Polyoxyalkylenalkohole enthalten die ein- und mehrwertigen Alkohole der Formel X gewöhnlich nicht mehr als etwa 40 Kohlenstoffatome. Mehrwertige Alkohole sind bevorzugt, da die davon abgeleiteten erfindungsgemäßen Ester und/oder Halbester außergewöhnlich gute Trenneigenschaften besitzen. Beispiele für Polyoxyalkylenalkohole, die sich als Baustein für die erfindungsgemäßen Trennmittel eignen, sind Polyoxyalkylenalkohol-Demulgatoren für wäßrige Emulsionen. Unter "Demulgatoren" für wäßrige Emulsionen werden Polyoxyalkylenalkohole verstanden, die die Bildung von wäßrigen Emulsionen verhindern oder verzögern oder wäßrige Emulsionen brechen. Unter "wäßrigen Emulsionen" werden Öl-in-Wasser- und Wasser-in-Öl-Emulsionen verstanden. Zahlreiche handelsübliche Polyoxyalkylenalkohol-Demulgatoren können als A) verwendet werden. Hierzu zählen die Reaktionsprodukte von verschiedenen organischen Aminen, Carbonsäureamiden und quaternären Ammoniumsalzen mit Ethylenoxid. Derartige polyoxyethylierte Amine, Amide und quarternäre Salze, Ethylenoxidkondensate von N-Alkylalkylendiaminen, tertiäre Amine sind die Ethylenoxidkondensate von primären Fettsäureaminen; Ethylenoxidkondensate von Fettsäureamiden; polyoxyethylierte quarternäre Ammoniumsalze, z.B. quarternäre Ammoniumchloride sind Handelsprodukte.
   Bevorzugte Demulgatoren als Komponente A sind flüssige Polyoxyalkylenalkohole und deren Derivate. Als Derivate eignen sich z.B. Hydrocarbylether und Carbonsäureester, die durch Umsetzen der Alkohole mit verschiedenen Carbonsäuren erhalten werden. Spezielle Hydrocarbylreste sind z.B. Alkyl-, Cycloalkyl-, Alkylaryl-, Aralkyl-, und Alkylarylalkylreste mit bis zu etwa 40 Kohlenstoffatomen, wie die Methyl-, Butyl-, Dodecyl-, Tolyl-, Phenyl-, Naphthyl-, Dodecylphenyl-, p-Octylphenylethyl- und Cyclohexylgruppe. Zur Herstellung der Esterderivate eignen sich z.B. Mono- und Polycarbonsäuren, wie Essigsäure, Valeriansäure, Laurinsäure, Stearinsäure und Ölsäure, Polyole oder flüssige Triole aus Ethylenoxid und Propylenoxid vom Durchschnittsmolekulargewicht 4000 bis 5000 sowie Dodecylphenyl- oder Nonylphenylpolyethylenglkolether und Polyalkylenglykole und verschiedene Derivate sind Handelsprodukte.
   Weitere Produkte als Komponente A sind Verbindungen, welche sich von den oben genannten ableiten und im Durchschnitt mindestens eine freie alkoholische Hydroxylgruppe pro Polyoxyalkylenmolekül aufweisen. Bei diesen Demulgatoren wird eine Hydoxylgruppe dann als alkoholisch bezeichnet, wenn sie an ein Kohlenstoff gebunden ist, das nicht Bestandteil eines aromatischen Kerns ist. Zu den bevorzugten Polyoxyalkylenpolyolen als Komponente A zählen Polyole, die als Blockpolymere hergestellt worden sind. Hierzu wird eine hydroxysubstituierte Verbindung R⁴-(OH)_{q} (wobei _{q} den Wert 1 bis 10 hat und R⁴ z.B. der Rest eines ein- oder mehrwertigen Alkohols oder ein oder mehrwertigen Phenols oder Naphthols ist) mit einem Alkylenoxid 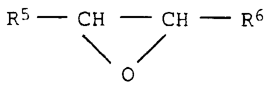 (wobei R⁵ Wasserstoff oder ein niederer Alkylrest mit bis zu 4 Kohlenstoffatomen ist, R⁶ ein Wasserstoffatom ist oder dieselbe Bedeutung wie R⁵ hat, mit der Maßgabe, daß das Alkylenoxid nicht mehr als 10 Kohlenstoffatome enthält) unter Bildung eines hydrophoben Grundkörpers umgesetzt. Diese Verbindung wird dann mit Ethylenoxid unter Bildung eines hydrophilen Anteils umgesetzt, so daß ein Molekül mit hydrophobem und hydrophilen Bereichen entsteht. Die Herstellung von Polyolen mit hydrophilen und hydrophoben Bereichen ist bekannt. Je nach Systemformulierung der Polyurethan-A-Komponente setzt man gezielt Polyole ein, welche als A) zu Trennmitteln umgesetzt werden, welche wahlweise einen höheren hydrophoben Anteil besitzen. Es kann jedoch auch von Vorteil sein, den hydrophilen Anteil zu erhöhen.
   Beispiele für Verbindungen der Formel R³(̵OH)ₘ sind aliphatische Polyole z.B. Alkylenglykole und Alkanpolyole, wie z.B. Ethylenglykol, Propylenglykol, Trimethylenglykol, Trethylenglykol, Hexandiol 1,6, Glycerin, Pentaerythrit, Di-Pentaerythrit, Erythrit, Sorbit, Sorbitan, Xylose, Dextrose, Fructose, Glucose, Lactose, Mannit, Zuckersäuren, Xylit, Dextrine, Dextrane, Rizinusöl, Apfelsäure, Glycerinsäure, Selachylalkohol, Glycerinaldehyd, Weinsäure, Glucuronsäure, Arabinose, Fructose, Sorbose, Cetylalkohol, Wollwachsalkohol, sowie aromatische Hydroxyverbindungen, z.B. alkylierte ein- und mehrwertige Phenole und Naphthole wie Kresole, Heptylphenole, Dioctylphenole, Resorcin, Pyrogallol. Weitere geeignete Polyoxyalkylenpolyole als Komponente A) sind solche mit 2 bis 4 Hydroxylgruppen und Molekülen, die im wesentlichen aus hydrophoben Anteilen mit 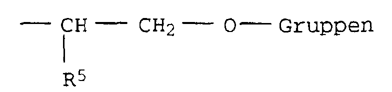 (wobei R⁵ ein niederer Alkylrest mit bis zu 3 Kohlenstoffatomen ist) und hydrophilen Anteilen mit -CH₂-CH₂-O-Gruppen bestehen. Derartige Polyole können dadurch hergestellt werden, daß man zunächst eine Verbindung der Formel R³(̵OH)ₘ (wobei ₘ den Wert 2 bis 6 hat) mit einem endständigen Alkylenoxid der Formel 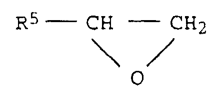 umsetzt und danach das Produkt mit Ethylenoxid umsetzt. Beispiele für R³(̵OH)ₘ sind: TMP (Trimethylolpropan), TME (Trimethylolethan), Ethylenglykol, Trimethylenglykol, Tetramethylenglykol, Tri-(β-hydroxypropyl)-amin, 1,4-(2-Hydroxyethyl)-cyclohexan, N,N,N',N'-Tetrakis-(2-hydroxypropyl)-ethylendiamin, N,N,N',N'-Tetrakis-(2-hydroxyethyl)-ethylendiamin, Tri-(β-hydroxyethyl)-amin, N,N-Dimethylaminopropanamin(1,3), N,N-Dimethylamino-dipropylentriamin, Naphthol, alkylierte Naphthole, Resorcin. Die Polyoxyalkylenalkohole sollten für ihre Eignung als Komponente A) zur Herstellung der inneren Trennmittel ein mittleres Molekulargewicht von etwa 500 bis 10 000, vorzugsweise etwa 200 bis 7000 besitzen. Die Ethylenoxygruppen (-CH₂-CH₂-O-) machen normalerweise etwa 5 bis 40 % des gesamten durchschnittlichen Molekulargewichts aus.
   Die genannten Polyole eignen sich hervorragend als Komponente A) zur Herstellung der erfindungsgemäßen inneren Trennmittel. Die genannten Polyole können mit anorganischen Säuren wie Borsäure, o-Phosphorsäure, Schwefelsäure, organischen Sulfonsäuren, Amidosulfonsäure oder niederen Mono- und/oder Polycarbonsäuren und/oder deren Teilester, wie z.B. Phosphorcarbonsäuren, Ameisensäure, Essigsäure, Maleinsäure, Maleinsäurehalbester, Milchsäure oder Citronensäure, sowie mit Fettsäuren z.B. Soja-, Oliven-, Sonnenblumen-, Leinsaat-, Harz-, Wurzelöl-, Lanolinsäure, Tallöl-, Rizinolsäure, Fischölsäure, Rapsölfettsäure, Palmkernfettsäuren, insbesondere jedoch Ölsäure, (Iso)Stearinsäure, Montanfettsäuren, Kollophoniumsäuren, Phenylalkylcarbonsäuren, bzw. Phtalsäure oder Maleinsäurehalbester langkettiger Fettalkohole umgesetzt werden, mit der Maßgabe, daß eine OH-Gruppe frei bleibt. Bei den oben beschriebenen basischen Polyoxyalkylenpolyolen tritt in der Regel keine Veresterung ein, sondern eine Salzbildung mit den genannten Säuren. Als vorteilhaft hat es sich erwiesen, die Säuren, insbesondere die genannten Fettsäuren, nicht stöchiometrisch sondern im Unterschuß einzusetzen. Sowohl die Teilester als auch die Salze eignen sich hervorragend als Komponente A zur Herstellung der erfindungsgemäßen Trennmittel.
   Polyoxyalkylenpolyole mit einem mittleren Molekulargewicht von etwa 2500 bis 6000, bei denen 10 bis 20 Gewichtsprozent des Moleküls auf die Ethylenoxygruppen zurückgehen, ergeben Halbester mit besonders guten Eigenschaften als Komponente A zur Herstellung der inneren Trennmittel.
   Beispiele für derartige Polyoxyalkylenpolyole sind 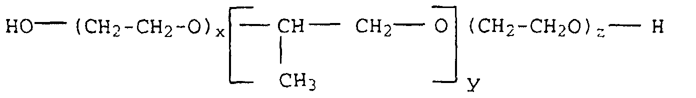 in der x, y und z ganze Zahlen mit einem Wert größer als 1 sind, so daß die -CH₂-CH₂O-Gruppen etwa 10 bis 15 Gewichtsprozent des Gesamtmolekulargewichts als Glykole ausmachen, wobei das durchschnittliche Molekulargewicht der Polyole etwa 2500 bis 4500 beträgt. Dieser Polyoltyp wird hergestellt, indem man Propylenglykol zunächst mit Propylenoxid und dann mit Ethylenoxid umsetzt. Die entsprechenden Halbester aus diesen Polyolen werden mit den oben genannten Fettsäuren dargestellt.
   Eine andere Gruppe von bevorzugen Polyoxyalkylenalkoholen als Vorprodukt A) sind die flüssigen Polyole folgender Struktur: 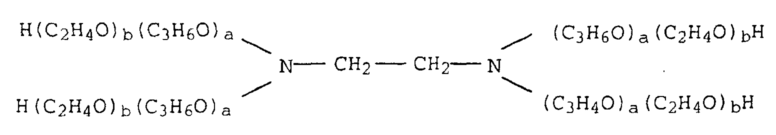
   Sie sind in der US-PS 29 79 528 beschrieben. Diese Polyole können dadurch hergestellt werden, daß man ein Alkylendiamin, wie Ethylendiamin, Propylendiamin oder Hexamethylendiamin, mit Propylenoxid umsetzt und anschließend mit Ethylenoxid umsetzt. Das Molgewicht beträgt bis zu 10 000.
   Ein weiterer Polyether, welcher als Komponente A) geeignet ist, ist ein Triol mit einem mittleren Molekulargewicht von etwa 4000 bis 5000 aus Propylenoxid und Ethylenoxid, wobei die Ethylenoxygruppen etwa 18 Gewichtsprozent des Triols ausmachen. Die Triole werden hergestellt, indem man Glycerin, TME oder TMP mit Propylenoxid zu einem hydrophoben Anteil umsetzt und hierauf mit Ethylenoxid die hydrophilen Anteile herstellt.
   Als Polyether A) eignen sich ferner Alkylenglykole und Polyoxyalkylenalkohole, wie Polyoxyethylenalkohole, Polyoxypropylenalkohole und Polyoxybutylenalkohole. Diese Polyglykole können bis zu etwa 150 Oxyalkyleneinheiten aufweisen, wobei der Alkylenrest 2 bis 8 Kohlenstoffatome enthält. Diese Polyoxyalkylenalkohole sind im allgemeinen zweiwertige Alkohole, d.h. jedes Molekül weist zwei Hydroxylgruppen als Endgruppen auf. Damit diese Polyole als A) geeignet sind, müssen sie mindestens eine derartige Hydroxylgruppe aufweisen. Die verbleibenden Hydroxylgruppen kann mit einer einwertigen, aliphatischen oder aromatischen Carbonsäure mit bis zu etwa 30 Kohlenstoffatomen, wie Ameisensäure, Essigsäure, Propionsäure, Buttersäure, Valeriansäure, n-Capronsäure, Caprylsäure, Caprinsäure, Laurinsäure, Palmitinsäure, Stearinsäure, Zuckersäuren wie Milchsäure oder Citronensäure oder Weinsäure sowie Benzoesäure, insbesondere Fettsäuren z.B. Soja-, Oliven-, Sonnenblumen-, Leinsaat-, Harz-, Wurzelöl-, Lanolin-, Tallöl-, Fischöl-, Rapsöl-, Palmkern-, Rizinolsäure, Linolsäure, Linolensäure, insbesondere Ölsäure, Montanfettsäuren, Kollophoniumsäuren, Phthalsäure oder Maleinsäurehalbester langkettiger Fettalkohole umgesetzt werden, mit der Maßgabe, daß eine OH-Gruppe frei bleibt. Bei Verwendung von Polyoxyethylenglykolen, welche einen hydrophilen Charakter besitzen, haben sich als hydrophile Säuren insbesondere die oben genannten Fettsäuren bewährt.
   Beispielhaft genannt seien PEG-400-monostearat PEG-400-monooleat, PEG-150-monolaurat. PEG hat die Bedeutung eines Polyoxyethylenglykols. Die Zahlen bedeuten die mittleren Molekulargewichte.
   Produkte der beschriebenen Art sind Handelsprodukte. Weitere Produkte sind POE (20) Sorbitanmonolaurat POE (20) Sorbitanmonooleat, POE (20) Sorbitantrioleat, POE (5) Sorbitantrioleat, POE (20) Lanolat. Auch diese Produkte sind Handelsprodukte. POE (20) hat die Bedeutung von 20 Ethylenoxid-Einheiten. POE bedeutet Polyoxyethylen-Rest. Die Zahl in Klammern bedeutet die Zahl der Ethylenoxid-Einheiten. Wichtig ist das Vorhandensein von mindestens 1 Hydroxylgruppen im Molekül, bevor die Produkte mit Polyisobutylenbernsteinsäureanhydrid umgesetzt werden. Weitere Beispiele sind POE (5)-Lanolat, POE (20)-Lanolat. Weiterhin geeignet sind die Halbester der Maleinsäure mit Fettalkoholen. Polyoxypropylenglykolen, welche ein durchschnittliches Molekulargewicht von 600 bis 4500 besitzen, eignen sich zur Herstellung von Monoestern. Bevorzugt werden eingesetzt Carbonsäuren mit bis zu 20 Kohlenstoffatomen. Weiterhin geeignet sind Zuckersäuren wie Milchsäure, Citronensäure, Borsäure, Phosphorsäure, Meleinsäurehalbester mit Alkyl-substituierten Alkylphenolen, welche mit bis zu 25 Mol Ethylenoxid umgesetzt werden. Weiterhin geeignet sind die Halbester der Maleinsäure mit Polyoxyethylenglykolen. Die genannten merhwertigen Alkohole sind als A) ebenfalls geeignet. Sie enthalten vorzugsweise 2 bis 10 Hydroxylgruppen Beispiele sind beispielsweise Ethylenglykol, Diethylenglykol, 1,2-Propandiol, Triethylenglykol, Tetraethylenglykol, Dipropylenglykol, Tripropylenglykol, Dibutylenglykol, Tributylenglykol sind andere Alkylenglykole und Polyoxyethylenglykole, bei denen die Alkylreste 2 bis etwa 8 Kohlenstoffatome enthalten.
   Beispielhaft genannt sind Propylenglykolmonolaurat, Propylenglykolmonorizinoleat, Propylenglykolmonosteärat, Ethylenglykolmonostearat, Diethylenglykolmonolaurat.
   Die Monoether dieser Alkylenglykole und Polyalkylenglykole eignen sich ebenfalls als A). Beispiele sind die Monoarylenether, Monoalkylether und Monoaralkylether dieser Alkylenglykole und Polyoxyalkylenglykole. Diese Gruppe hat die Formel

   HO(̵R_{A}O)̵ₚ-R_{B}-OR_{C}

   in der R_{C} einen Arylrest, z.B. eine Phenyl-, niedere Alkoxyphenyl- oder niedere Alkylphenylgruppe, einen niederen Alkylrest, z.B. eine Ethyl-, Propyl-, tert.-Butyl- oder Phenylgruppe, oder einen Aralkylrest, z.B. eine Benzyl-, Phenylethyl-, Phenylpropyl- oder p-Ethylphenylethylgruppe, bedeutet, p einen Wert von 0 bis etwa 150 hat und R_{A} und R_{B} niedere Alkylenreste mit 2 bis etwa 3, vorzugsweise 2 bis 4 Kohlenstoffatomen darstellen. Polyoxyalkylenglykole, bei denen die Alkylenreste Ethylen- oder Propylengruppen sind und p einen Wert von mindestens 2 hat, sowie deren Monoether sind bevorzugt. Als ein- und mehrwertige Alkohole (A) eignen sich ferner aromatische Monohydroxy- und Polyhydroxyverbindungen. Ein- und mehrwertige Phenole und Naphtole sind bevorzugte aromatische Hydroxyverbindungen. Die aromatischen Hydroxyverbindungen können neben den Hydroxysubstituenten auch weitere Substituenten enthalten, z.B. Halogenatome oder Alkyl-, Alkenyl-, Alkoxy-, Alkylmercapto- oder Nitrogruppen. Gewöhnlich enthalten die aromatischen Hydroxyverbindungen 1 bis 4 Hydroxylgruppen. Spezielle Beispiele für aromatische Hydroxyverbindungen sind: Phenol, p-Chlorphenol, p-Nitrophenol, β-Naphthol, α-Naphthol, Kresole, Resorcin, Brenzkatechin, Carvacrol, Thymol, Eugenol, p,p'-Dihydroxybiphenyl, Hydrochinon, Pyrogallol, Phloroglucin, Hexylresorcin, Orcin, Guajacol, 2-Chlorphenol, 2,4-Dibuthylphenol, Propentetramer-substituiertes Phenol. Didodecylphenol, 4,4'-Methylen-bis-methylen-bis-phenol, α-Decyl-β-naphthol, Polyisobutenyl- (Molekulargewicht etwa 1000)-substituiertes Phenol, das Kondensationsprodukt aus Heptylphenol mit 0,5 Mol Formaldehyd, das Kondensationsprodukt aus Octylphenol und Aceton. Di-(hydroxyphenyl)-oxid, Di-(hydroxyphenyl)-sulfid, Di-(hydroxyphenyl)-disulfid und 4-Cyclohexylphenol. Phenol und mit aliphatischen Kohlenwasserstoffresten substituierte Phenol, z.B. alkylierte Phenole mit bis zu drei aliphatischen Kohlenwasserstoffsubstituenten, sind besonders bevorzugt. Jeder der aliphatischen Kohlenwasserstoffsubstituenten kann 100 oder mehr Kohlenstoffatome enthalten, enthält jedoch gewöhnlich 1 bis 30 Kohlenstoffatome, Alkyl- und Alkenylreste sind bevorzugte aliphatische Kohlenwasserstoffsubstituenten.
   Weitere spezielle Alkohole als Komponente A sind einwertige Alkohole, z.B. Methanol, Ethanol, Isopropanol, Isooctanol, Dodecanol, Cyclohexanol, Cyclopentanol, Behenylalkohole, Hexatriacontanol, Neopentylalkohol, Isobutanol, Benzylalkohol, β-Thenylalkohol, 2-Methylcyclohexanol, β-Chlorhexanol, Ethylenglykol-monomethylether, Ethylenglykolmonobutylether, Diethylenglykolmonopropylether, Triethylenglykolmonododecylether, Ethylenglkolmonostearat, Diethylenglkolmonostearat, sek. Pentylalkohol, tert. Butanol, σ-Bromdodeanol, Glcerin-dioleat, Wollwachsalkohol, Cholesterin, POE (5)-Lanolinalkohol, (POE) (10-40) Lanolinalkohol, Allylalkohol, Cetylalkohol, Cinnamylalkohl, 1-Cyclohexan-3-ol, Oleylalkohol. Geeignet sind ferner Fettalkoholether wie Polyoxypropylen (10) Cetylalkohol, Polyoxypropylen (20) Cetylalkohol, Polyoxypropylen (15) Stearylalkohol. Obwohl die Alkohole prinzipiell als Komponente geeignet sind, eignen sich selbstverständlich auch die oben genannten Etherderivate, die dadurch hergestellt werden, daß insbesondere die Fettalkohole mit Ethylenoxid umgesetzt werden. Es ist auch möglich, solche Substanzen umzusetzen, indem man höhere Fettsäuren mit Ethylenoxid umsetzt. Beispielhaft genannt ist POE (5)-Ölsäure oder POE (20) Lanolinfettsäure.
   Andere spezielle Alkohole A) sind Etheralkohole und Aminoalkohole, z.B. Oxyalkylen-, Oxyarylen-, Aminoalkylen- und Aminoarylen-substituierte Alkohole mit einem oder mehreren Oxyalkylen-, Aminoalkylen- oder Aminoarylenoxyarylenresten. Beispiele hierfür sind die Mono- und Dialkylether von Ethylenglykol und Diethylenglykol, Phenoxyethanol, Heptylphenyl-(oxypropylen)₆-OH, Octyl-(oxyethylen)₃₀-OH, Phenyl(oxyethylen)₃₀-OH, PHenyl(oxyoctylen)₂-OH, Mono-(heptylphenyloxypropylen)-substituiertes Glycerin, Poly(styroloxid), Aminoethanol, 3-Aminoethylpentanol, Di-(hydroxyethyl)-amin- p-Aminophenol, Tri-(hydroxypropyl)-amin, N-Hydroxyethylethylendiamin und N,N,N',N'-Tetrahydroxtrimethylendiamin, Tri-(hydroxyethyl)amin, N,N,N',N'-Tetrakis-(2-hydroxyethyl)-ethylendiamin, N,N,N',N'-Tetrakis-(2-hydroxypropyl)-ethylendiamin sowie dessen Oxyalkylen-Derivate sowie das Umsetzungsprodukt aus Ethylendiamin mit 4 Mol Propylenoxid. Die genannten Produkte können auch mit Ethylenoxid und/oder Propylenoxid umgesetzt werden. Weiterhin können sie mit Monocarbonsäuren teilverestert sein.
   Weitere (als A) verwendbare mehrwertige Alkohole sind Glycerin, Glycerinmonooleat, Glycerinmonostearat, Glycerinmonomethylether, Pentaerythrit, 9,10-Dihydroxystearinsäure-n-butylester, 9,10-Dihydroxystearinsäuremethylester 1,2-Butandiol, 2,3-Hexandiol, 2,4-Hexandiol, Pinakol, Erythrit, Arabit, Sorbit, Sorbitan, 1,2-Cyclohexandiol, Xylolglykol, Kohlenhydrate, wie Zucker, Stärke, Cellulosen etc. Beispiele für Kohlenhydrate sind Glucose, Fructose, Sucrose, Xylose, Dextrose, Lactose, Mannit, Xylit, Sacchorose, Rhamnose, Dulcit, Glycerinaldehyd, Galacturonsäure.
   Mehrwertige Alkohole mit mindestens 3 Hydroxylgruppen, von denen einige, jedoch nicht alle mit einer aliphatischen Monocarbonsäure mit 8 bis 30 Kohlenstoffatomen umgesetzt wurden, z.B. mit Caproylsäure, Ölsäure, Stearinsäure, Linolsäure, Laurinsäure oder Tallölfettsäure, Rizinolsäure eignen sich besonders für A). Weitere Beispiele für derarige teilweise versetzte mehrwertige Alkohole sind Sorbitmonooleat, Sorbitdistearat, Glycerinmonooleat, Glycerindioleat, Erythritdilaurat, Sorbitanmonooleat, Sorbitantrioleat. Die freien OH-Gruppen bei den Sorbitan-Produkten können ethoxyliert sein, z.B. (POE) (20) Sorbitantrioleat. Die Herstellung von Anhydrohexiten erfolgt durch Dehydratisierung oder Hexite (z.B. Sorbit, Mannit und Dulcit), d.h. durch Dehydratisierung sechswertiger, aliphatischer, geradkettiger und gesättigter Alkohole mit 6 Kohlenstoffen. Bei der Entfernung eines Wassermoleküls aus Hexiten entstehen die Monoanhydrohexite, auch Hexitane genannt. (Z.B. Sorbitan), und bei der Entfernung von zwei Molen Wasser entstehen die Dinhydrohexite auch Hexide genannt (z.B. Sorbit oder Isosorbit).
   Wie oben ausgeführt, kann Sobitan ethoxyliert bzw. verestert werden. Das ethoxylierte Produkt kann nochmals mit Carbonsäure, insbesondere mit Hydroxy-Säuren verestert werden. Zu Veresterung können Zuckersäuren als auch Hydroxyfettsäuren wie Rizinolsäure und/oder Fischölfettsäuren verwendet werden.
   Zur Veresterung von Sorbitan können Capronsäure, Octansäure, Caprinsäure, Laurinsäure, Myristinsäure, Palmitinsäure, Stearinsäure, Eicosansäure, Behensäure, Laurolinsäure, Myristoleinsäure, Palmitoleinsäure, Ölsäure, Rizinolsäure, Linolsäure, Linolensäure, Cocosnußölsäure, Lanolinfettsäure, Talgfettsäure und Palmkernfettsäure verwendet werden.
   Bevorzugte Alkohole als Komponente A) sind mehrwertige Alkohole mit bis zu etwa 12 Kohlenstoffatomen, insbesondere 3 bis 10 Kohlenstoffatomen. Beispielhaft genannt sind diese Glycerin, Erythrit, Pentaerythrit, Dipentaerythrit, Gluconsäure, Glycerinaldehyd, Glucose, Arabinose, 1,7-Heptandiol, 1,2,3-Hexantriol, 1,2,4-Hexantriol, 1,2,5-Hexantiol, 2,3,4-Hexantriol, 1,2,3-Butantriol, 1,2,4-Butantriol, Chinasäure, 2,2,6,6-Tetrkis-(hydroxymethyl)-cyclohexanol, 1,10-Decandiol und Digitalose. Weiterhin als bevorzugte Gruppe als Komponente A) sind mehrwertige Alkanole mit 3 bis 10 Kohlenstoffatomen mit mindestens 3 Hydroxylgruppen. Beispiele sind: Glycerin, Erythrit, Pentaerythrit, Mannit, Sorbit, Sorbitan, 2-Hydroxymethyl-2-methyl-1,3-propandiol (Trimethylolethan), Trimethylolpropan, 1,2,4-Hexantriol.
   Aminoalkohole, welche als A) geeignet sind, enthalten in der Regel nur tertiäre Amino-Gruppen. Weniger geeignet sind auch Aminoalkohole mit primären, sekundären und tert. Amino-Gruppen. Beispiele für tertiäre Aminogruppen enthaltende Verbindungen sind Triaethanolamin, Triisopropanolamin, N,N,N',N'-tetrakis-(2-hydroxy-propyl)ethylendiamin, Tri-(2-hydroxyethyl)-amin, N-(2-hydroxyethyl)-morpholin, N-(2-hydroxy-ethyl)-piperidin, N,N-Di-(2-hydroxyethyl)-glycin und deren Ether mit aliphatischen Alkoholaten. Weitere geeignete Aminoalkohole sind der Literatur zu entnehmen.
   Weitere geeignete Verbindungen als Komponente A) sind OH-haltige pflanzliche und tierische Öle und Fette, z.B. Rizinusöl, Specköl. Besonders geeignet ist Rizinusöl und dessen Umsetzungsprodukte mit Ethylenoxid und/oder Propylenoxid. Weiterhin geeignet sind Verbindungen, wie sie in EP 0 554 590 beschrieben sind. Weiter geeignet sind Alkylenoxidpolymerisate und -copolymerisate sowie deren Derivate, bei denen die entständigen Hydroxylgruppen z.B. durch Verestern oder Verethern modifiziert worden sind. Beispiele für derarige Öle sind die Polymerisationsprodukte von Ethylenoxid oder Propylenoxid, die Alkyl- und Arylether dieser Polyoxyalkylenpolymeren (z.B. Polyisopropylenglykolmethylether mit einem mittleren Molekulargewicht von 1000, Polyethylenglykoldiphenylether mit einem Molekulargewicht von 1000, Polyethylenglykoldiphenylether mit einem Molekulargewicht von 500 bis 1000 oder Polypropylenglykoldiethylether mit einem Molekulargeiwcht von 1000 bis 1500) oder deren Mono- und Polycarbonsäureester, z.B. Essigsäureester, gemischten C₃-C₈-Fettsäureester oder der C₁₃-Oxosäurediester von Tetraethylenglykol.
   Eine weitere Klasse sind die Ester von Dicarbonsäuren (z.B. Phthalsäure, Bernsteinsäure, Alkylbernsteinsäuren und Alkenylbernsteinsäuren, Maleinsäure, Azelainsäure, Korksäure, Sebacinsäure, Fumarsäure, Adipinsäure, Linolsäure-Dimer, Malonsäure, Alkylmalonsäuren oder Alkenylmalonsäuren) mit verschiedenen Alkoholen (z.B. Butanol, Hexanol, Dodecylalkohol, 2-Ethylhexylalkohol, Ethylenglykol, Diethylenglykolmonoether oder Propylenglykol). Spezielle Beispiele für derartige Ester sind Dibutyladipat, Di-(2-ethylhexyl)sebacat, Di-n-hexylfumarat, Dioctylsebacat, Diisooctylazelat, Diisodecylazelat, Dioctylphthalat, Didecylphthalat, Dieicosylsebacat, der 2-Ethylhexyldiester von Linolsäure-Dimer, und der durch Umsetzen von 1 Mol Sebacinsäure mit 2 Mol Tetraethylenglykol und 2 Mol 2-Ethylcapronsäure hergestelltes Ester.
   Andere als synthetische Öle geeignete Ester leiten sich z.B. von C₅-C₃₀-Monocarbonsäuren und Polyolen oder Polyolethern ab, wie Neopentylglykol, Trimethylolpropan, Pentaerythrit, Dipentaerythrit oder Tripentaerythrit.
   Weitere Ester sind solche auf Basis aromatischer-, aliphatischer-Dicarbonsäuren mit Alkoholen und insbesondere in Kombination mit Ölsäure.
   Die Herstellung der erfindungsgemäßen Trennmittel erfolgt nach bekannten Verfahren. Im allgemeinen erfolgt die Umsetzung derart, daß ca. 50 bis 75 % der Carboxylgruppen mit den Reaktanten umgesetzt sind. Die beschriebenen inneren Trennmittel eignen sich auch in Kombination mit synthetischen Schmiermitteln auf Basis aromatischer und aliphatischer Kohlenwasserstoffe bzw. Mineralölen. Bevorzugt eignen sich dabei Umsetzungsprodukte aus PIBSA und Polyolen. Als Ausgangstoffe für die erfindungsgemäßen Trennmittel eignen sich auch die unter Anspruch 1b genannten Verbindungen.
   Nach der Umsetzung können noch verbliebene Säuregruppen durch Reaktion mit Gruppen abgesättigt werden, die mit Säuregruppen reaktiv sind. Derartige Verbindungen für diesen Zweck werden in US-A-4 234 435 aufgezählt. Beispielhaft seien hier genannt Borverbindungen, Phosphorverbindungen, Epoxide, Formaldehyd. Möglich ist auch die Absättigung der freien Carboxylgruppen mit Metallionen. Obwohl die erfindungsgemäßen inneren Trennmittel bevorzugt metallfrei verwendet werden und dies Vorteile bringt, beispielsweise eine bessere Oberflächenbeschaffenheit der Formteile, gibt es durchaus auch Anwendungen, bei denen das Vorhandensein von Metallionen möglich ist.
   Die eingesetzte Menge an inneren Trennmitteln beträgt, in Abhängigkeit von Formteilgeometrie und- material, 0,01 bis 5 Gew.-Teile, bezogen auf die Komponente b) und kann durch Vorversuche leicht ermittelt werden. Üblicherweise werden die inneren Trennmittel der Polyolkomponente zugesetzt. Es kann jedoch auch vorteilhaft sein, sie der Isocyanatkomponente zuzusetzen. Als günstig hat es sich erwiesen, die Vorstufen der inneren Trennmittel (nicht acyliert) zuzusetzen.
   Die erfindungsgemäß verwendeten inneren Trennmittel sind sehr gut in den Polyurethan - Aufbaukomponenten löslich und haben daher auch bei großflächigen oder komplizierten Formteilen eine gute Trennwirkung.
e) Als Katalysatoren (e) zur Herstellung der Polyisocyanat-Polyadditionsprodukte werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Als gut geeignet haben sich auch Zialkylzinn(IV)mercaptoverbindungen erwiesen, wie z.B. Bislaurylzinn(IV)-dimercaptid, und Verbindungen der allgemeinen Formeln R₂Sn(SR'-O-CO-R'')₂ oder R₂Sn(SR'-CO-OR'')₂, in denen R einen Alkylrest mit mindestens 8 Kohlenstoffatomen, R' einen Alkylrest mit mindestens 2 Kohlenstoffatomen und R'' einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis/thioethylenglykol-2-ethylhexoat), Dioctylzinn-bis(thioethylen-glykollaurat), Dioctylzinn-bis(thiolatoessigsäure-2-ethylehxylester, Dioctylzinn-bis(thiolatoessigsäurehexylester) und Dioctylzinn-bis(thiolatoessigsäurelaurylester. Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR')₂ oder RSn(SR')₃, in denen R und R' Alkylgruppen darstellen, die 4 bis 8 Kohlenstoffatome bei R sowie 4 bis 12 Kohlenstoffatome bei R' enthalten und R' außerdem die Reste -R''COOR'' und -R''OCOR''' bedeuten kann, in denen R'' Alkylgruppen mit 1 bis 6 Kohlenstoffatomen und R''' Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinn-bis(thioethylenglykol-2-ethyl-hexoat) und Dibutylzinn-bis(thioethylenglykollaurat).
   Die organischen Metallverbindungen können als Katalysatoren einzeln oder in Form von Katalysatorkombinationen eingesetzt werden. Als äußerst vorteilhaft hat sich eine Kombination erwiesen, die besteht aus Di-n-octylzinn-bis-(2-ethylhexylthioglykolat) und Mono-n-octylzinn-tris-(2-ethylhexylthioglykolat), vorteilhafterweise im Gewichtsverhältnis 70:30 bis 30:70 oder 94:6.
   Die organischen Metallverbindungen können ferner in Kombination mit stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',M'-Tetramethyl-ethylendiamin, N,N,N',N'-Tetramethyl-butandiamin, N,N,N',N'-Tetramethyl-diaminodicyclohexylmethan, Pentamethy-diethylentriamin, Tetramethyldiaminoethylether, Bis-(dimethylaminopropyl)-harnstoff, Dimethylpiperazin, 1,2-Dimethylimidazol, 1-Aza-bi-cyclo(3,30)-octan und vorzugsweise 1,4-Diaza-Bi-cyclo-(2,2,2)-otan und Alkanolaminverbindungen, wie Triethanolamin, Triisopropanolamin, N-Methyl- und N-Ethyl-diethanolamin und Dimethylethanolamin.
   Insbesondere bei Verwendung eines Polyisocyanatüberschusses kommen als Katalysatoren ferner in Betracht: Tris-(dialkylaminoalkyl)s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
(f) Als Treibmittel (f) zur Herstellung von zelligen PU- oder PU-PH-Elastomeren und PU- oder PIR-Schaumstoffen findet vorzugsweise Wasser Verwendung, das mit den organischen, gegebenenfalls modifizierten Polyisocyanaten (a) unter Bildung von Kohlendioxid und Aminogruppen reagiert, die ihrerseits mit Polyisocyanaten (a) zur Harnstoffgruppen weiterreagieren und dadurch die mechanischen Eigenschaften der zelligen Polyisocyanat-Polyadditionsprodukte beeinflussen können.
   Zur Erzielung der technisch üblichen Raumgewichte wird das Wasser zweckmäßigerweise in Mengen von 0,05 bis 7 Gew.-%, vorzugsweise von 0,1 bis 6 Gew.-% und insbesondere von 2 bis 4 Gew.-%, bezogen auf das Gewicht der Aufbaukomponenten (a) bis (c) verwendet.
   Als Treibmittel (f) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 80°C, vorzugsweise von 10 bis 50°C besitzen, oder Gase eingesetzt werden.
   Die als Treibmittel geeigneten Flüssigkeiten der oben genannten Art und Gase können z.B. ausgewählt werden aus der Gruppe der Alkane, wie z.B. Propan, n- und iso-Butan, n- und iso-Pentan und vorzugsweise der technischen Pentangemische, Cycloalkane und Cycloalkene, wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert.-Butylmethylether, Cycloalkylenether, wie z.B. Furan, Ketone, wie z.B. Aceton, Methylethylketon, Carbonsäureester, wie z.B. Ethylacetat, Methylformiat und Ethylen-Acrylsäuretertiärbutylester, tertiäre Alkohole, wie z.B. tertiär Butanol, Carbonsäuren, wie z.B. Ameisensäure, Essigsäure und Propionsäure, Fluoralkane, die in der Trophosphäre abgebaut werden und deshalb für die Ozonschicht unschädlich sind, wie z.B. Trifluormethan, Difluormethan, Difluorethan, Tetrafluorethan und Heptafluorethan und Gase, wie z.B. Stickstoff, Kohlenmonoxid und Edelgase, wie z.B. Helium, Neon und Krypton.
   Als Treibmittel geeignet sind ferner Salze, die sich thermisch zersetzen, wie z.B. Ammoniumbicarbonat und/oder Ammoniumcarbamat oder Verbindungen, die in situ solche Salze bilden, wie z.B. wäßriger Ammoniak und/oder Amine und Kohlendioxid, und Ammoniumsalze organischer Carbonsäuren, wie z.B. die Monoammoniumsalze der Malonsäure oder Borsäure.
   Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsgemische eingesetzt werden können, hängt ab von der Dichte, die man erreichen will und der eingesetzten Menge an Wasser. Die erforderlichen Mengen können durch einfache Handversuche leicht ermittelt werden. Zufriedenstellende Ergebnisse liefern üblicherweise Feststoffmengen von 0,5 bis 30 Gew.-Teilen, vorzugsweise von 2 bis 15 Gew.-Teilen, Flüssigkeitsmengen von 1 bis 15 Gew.-Teilen, vorzugsweise von 3 bis 12 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (b) und gegebenenfalls (c). Die Gasbeladung mit z.B. Luft, Kohlendioxid, Stickstoff und/oder Helium kann sowohl über die höhermolekularen Verbindungen (b) und gegebenenfalls niedermolekularen Kettenverlängerungs- und/oder Vernetzungsmitteln (c) als auch über die Polyisocyanate (a) oder über (a) und (b) und gegebenenfalls (c) erfolgen.
g) Die nach dem erfindungsgemäßen Verfahren hergestellten kompakten oder zelligen Formkörper aus Polyisocyanat-Polyadditionsprodukten können mit einer Deckschicht, z.B. aus Lack oder einem Dekormaterial versehen werden und/oder einen Einleger als Befestigungselement und/oder insbesondere ein Verstärkungsmittel enthalten.
   Als Dekormaterialien in Betracht kommen beispielsweise gegebenenfalls bedrucktes oder buntes Papier, Pappe, Karton, Folien aus TPU, PVC, polyvinylchloridhaltigen Polymerisatgemischen, z.B. aus PVC/ABS, PVC/PU, PVC/ABS/Polyvinylacetat, Vinylchlorid/Methacrylat/Butadien/Styrolcopolymerisat oder Etyhlen/Vinylacetat/Vinylchloridpfropfcopolymerisat und Textilien sowie Teppiche.
   Bewährt haben sich beispielsweise Einleger aus metallischen Werkstoffen, wie z.B. Aluminium, Kupfer, Titan, Messing oder Stahlblech oder Kunststoffen wie z.B. TPU, Polyamid, Polycarbonat, Polyalkylenterephthalat, z.B. Polybutylenterephthalat und Polyolefin-homo- oder -copolymeren sowie aus Mischungen und Blends derartiger Kunststoffe.
   Als Verstärkungsmittel in Betracht kommen z.B. Fasern und aus Fasern hergestellte Gelege, Gewebe, Matten, Filze oder Vliese. Geeignete Fasern sind beispielsweise Naturfasern wie z.B. Zellulose-, z.B. Baumwoll-, Sisal-, Jute-, Hanf-, Schilf- oder Flachsfasern, Kunststoffasern wie z.B. Polyester-, Polyurethan-, Polyamid-, Aramid- oder Polyacrylnitrilfasern, Metallfasern, vorzugsweise Kohlefasern und insbesondere Glasfasern, wobei die Fasern mit Haftvermittlern und/oder Schlichten ausgerüstet sein können. Die Art der Verstärkungsmittel hängt vom Verwendungszweck der Formteile ab.
   Geeignete Glasfasern, die z.B., wie bereits ausgeführt wurde, auch in Form von Glasgeweben, -matten, -vliesen und/oder vorzugsweise Glasseidenrovings oder geschnittener Glasseide aus alkaliarmen E-Gläsern mit einem Durchmesser von 5 bis 200 µm, vorzugsweise 6 bis 15 µm eingesetzt werden können, weisen nach ihrer Einarbeitung in die PU-Formmassen im allgemeinen eine mittlere Faserlänge von 0,05 bis 1 mm, vorzugsweise von 0,1 bis 0,5 mm auf.
   Zur Herstellung von Formteilen, z.B. im Dichtebereich von 0,15 bis 1,4 g/cm³, finden insbesondere Kombinationen aus einem PU-System und Glasmatten, -geweben und/oder -gelegen Verwendung. Für Formkörper bis zu einer Gesamtdichte von ungefähr 0,6 g/cm³ und eine Dicke bis zu ungefähr 5 mm eignen sich z.B. voluminöse Endlosglasmatten, beispielsweise mit Glasgewichten von 225 bis 650 g/m², die beim Aufschäumen des PU-Systems sehr gut durchlässig sind, so daß eine vollständige Tränkung der Glasmatten erzielt werden kann. Die nach dem erfindungsgemäßen Verfahren hergestellten Formkörper können Verstärkungsmittelgehalte, z.B. Glasgehalte, bis zu 75 Gew.-% besitzen, z.B. bei zusätzlichem oder alleinigem Einsatz von Glasgeweben und/oder Glasgelegen; werden hingegen nur Endlosglasmatten eingesetzt, so ist bedingt durch das hohe Volumen der Matten der Glasgehalt niedriger und erreicht bis ungefähr 45 Gew.-%.
h) Zur Herstellung der selbsttrennenden, kompakten oder zelligen, gegebenenfalls Verstärkungsmittel enthaltenden Formkörpern aus Polyisocyanat-Polyadditionsprodukten kann es aus verfahrenstechnischen oder systemspezifischen Gründen zweckmäßig sein, zusätzliche Hilfsmittel mit zu verwenden. Hierfür in Betracht kommen beispielsweise zusätzliche äußere und/oder innere Trennmittel, oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen oder Mischungen davon sowie insbesondere zur Herstellung von Formkörpern mit einer verdichteten Randzone und einem zelligen Kern unter Einsatz von Wasser als Treibmittel in einem geschlossenen Formwerkzeug unter Verdichtung mikroporöse Aktivkohle und/oder mikroporöse Kohlenstoffmolekularsiebe gemäß US-A-5 254 597, kristalline, mikroporöse Molekularsiebe und/oder kristallines Siliciumoxid gemäß US-A-5 110 834, amorphe mikroporöse Kiesegel gemäß EP-A-0 513 573, Kondensate aus Polyhydroxylverbindungen und Ammoniumcarbonat und/oder Salze aus Aminen und Kohlendioxid.
   Als zusätzliche Trennmittel eignen sich beispielsweise Metallsalze der Stearinsäure, die aus handelsüblicher Stearinsäure hergestellt werden können, und die, ohne daß die Trennwirkung signifikant beeinträchtigt wird, bis zu 10 Gew.-%, vorzugsweise bis zu 5 Gew.-%, gegebenenfalls ungesättigte Carbonsäuren mit 8 bis 24 C-Atomen, wie z.B. Palmitinsäure, Ölsäure, Ricinolsäure u.a. enthalten kann.
   Als Metalle für die Bildung der Metallsalze der Stearinsäure finden beispielsweise Alkalimetalle, vorzugsweise Natrium und Kalium, Erdalkalimetalle, vorzugsweise Magnesium und Calcium und insbesondere Zink Verwendung. Vorzugsweise werden als Metallsalze der Stearinsäure Zinkstearat, Calciumstearat und Natriumstearat oder Mischungen aus mindestens zwei Stearaten eingesetzt. Insbesondere verwendet wird eine Mischung aus Zink-, Calcium- und Natriumstearat.
   Sofern sich die zusätzliche Mitverwendung der Metallsalze der Stearinsäure als Trennmittel als vorteilhaft erweist, werden die Metallstearate zweckmäßigerweise in einer Menge bis 12 Gew.-%, vorzugsweise von 0,1 bis 8 Gew.-%, bezogen auf das Gewicht der höhermolekularen Verbindungen mit mindestens zwei reaktiven Wasserstoffatomen (b) eingesetzt.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzol- oder Dinaphthylmethandisulfonsäure und Ricinolsäure; Schaumstabilisatoren, wie Siloxan-Oxalkylen/Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 10 Gew.-Teile der Komponente (b), angewandt.
   Als Gleitmittel hat sich der Zusatz eines Ricinolsäurepolyesters mit einem Molekulargewicht von 1.500 bis 3.500, vorzugsweise von 2.000 bis 3.000 besonders bewährt, der zweckmäßigerweise in einer Menge von 0,5 bis 10 Gew-%, vorzugsweise 5 bis 8 Gew.-%, bezogen auf das Gewicht der Komponente (b) oder der Komponenten (b) und (c) eingesetzt wird.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe, wie z.B. Glaskugeln, silikatische Mineralien, beispielsweise Schichtsilikate wie Antigorit, Serpentin, Hornblenden, Amphibole, Chrisotil, Talkum, Wollastonit, Glimmer und synthetische Silikate wie z.B. Magnesiumaluminiumsilikat (Transpafill®); Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid und Zinksulfid. Als organische Füllstoffe kommen beispielsweise in Betracht: Ruß, Melamin, Kollophonium, Cyclopentadienylharze und Pfropfpolymerisate. Die Füllstoffe können sowohl einzeln als auch in geeigneten Kombinationen untereinander oder miteinander eingesetzt werden. Verwendbar sind ferner Füllstoffe in Verbindung mit Verstärkungsmitteln.
   Die anorganischen und/oder organischen Füllstoffe können der Reaktionsmischung einverleibt werden, wobei sie, sofern sie überhaupt mitverwendet werden, vorteilhafterweise in einer Menge von 0,5 bis 50 Gew.-%, vorzugsweise 1 bis 40 Gew.-%, bezogen auf das Gewicht der Komponenten (a) bis (c) eingesetzt werden.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie gegebenenfalls modifizierter roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/oder Stärke zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Nähere Angaben über die oben genannten anderen üblichen Hilfs- und Zusatzstoffe sind der Fachliteratur, beispielsweise der Monographie von J.H. Saunders und K.C. Frisch, "High Polymers", Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983, zu entnehmen.

Zur Herstellung der kompakten oder zelligen Formkörper können die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zu Umsetzung gebracht werden, daß das Äquivalenz-Verhältnis von NCO-Gruppen der Polyisocyanate (a) zur Summe der reaktiven Wasserstoffatome der Komponenten (b) und gegebenenfalls (c) 0,85 bis 1,50:1, vorzugsweise 0,95 bis 1,15:1 und insbesondere 1,0 bis 1,1:1 beträgt.

Zur Herstellung von Formkörpern aus Isocyanuratgruppen aufweisenden Polyisocyanat-Polyadditionsprodukten finden zweckmäßigerweise Äquivalent-Verhältnisse von NCO-Gruppen der Polyisocyanate (a) zur Summe der reaktiven Wasserstoffatome der Komponenten (b) und gegebenenfalls (c) von 1,6 bis 30:1, vorzugsweise 1,6 bis 15:1 und insbesondere 2,5 bis 10:1 Verwendung.

Die erfindungsgemäßen zelligen oder kompakten, gegebenenfalls Verstärkungsmittel enthaltenden Formkörper aus Polyisocyanat-Polyadditionsprodukten, die vorzugsweise Urethan- oder Urethan- und Harnstoffgruppen sowie gegebenenfalls Isocyanuratgruppen oder auch überwiegend Harnstoffgruppen gebunden haben, können nach dem Prepolymer-Verfahren oder vorzugsweise nach dem one shot-Verfahren mit Hilfe der Niederdrucktechnik oder der Hochdrucktechnik in offenen oder vorzugsweise in geschlossenen, zweckmäßigerweise temperierbaren Formwerkzeugen, beispielsweise metallischen Formwerkzeugen, z.B. aus Aluminium, Gußeisen oder Stahl oder Formwerkzeugen aus faserverstärkten Polyester- oder Epoxidformmassen hergestellt werden.

Zellige und kompakte Formkörper aus Polyurethan- oder Polyurethan-Polyharnstoff-Elastomeren werden insbesondere mittels der Reaktionsspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien, 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem zweikomponentenverfahren zu arbeiten und die Aufbaukomponenten (b), (d) und gegebenenfalls (c) sowie (e) bis (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel zu verwenden.

Die Ausgangskomponenten können bei einer Temperatur von 15 bis 80°C, vorzugsweise 20 bis 55°C gemischt und in ein offenes oder geschlossenes Formwerkzeug, das zur Herstellung von verstärkten Formkörpern zuvor mit Geweben, Matten, Filzen, Vliesen und/oder Glegen als Verstärkungsmittel ausgelegt werden kann, eingefüllt werden. Zur Herstellung von Integralschaumstoffen und zelligen oder kompakten Elastomeren kann die Reaktionsmischung unter erhöhtem Druck in das geschlossene Formwerkzeug eingebracht werden.

Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Sofern die Formkörper in einem geschlossenen Formwerkzeug unter Verdichtung, z.B. zur Ausbildung einer kompakten Randzone und einem zelligen Formkörperkern, hergestellt werden, hat es sich als zweckmäßig erwiesen, Verdichtungsgrade im Bereich von 1,2 bis 8,3 vorzugsweise 1,6 bis 6,0 und insbesondere 2,0 bis 4,0 anzuwenden.

Die nach dem erfindungsgemäßen Verfahren hergestellten zelligen Elastomeren besitzen Dichten von ungefähr 0,76 bis 1,1 g/cm³, vorzugsweise von 0,9 bis 1,0 g/cm³, wobei die Dichte von füllstoffhaltigen und/oder insbesondere mit Glasmatten verstärkten Produkten höhere Werte, z.B. bis 1,4 g/cm³ und mehr erreichen kann. Formkörper aus derartigen zelligen Elastomeren finden z.B. Verwendung in der Automobilindustrie, beispielsweise im Automobilinnenraum als Verkleidungsteile, Hutablagen, Kofferraumabdeckung, Armaturentafeln und Kopfstützen, und als Außenteile, wie z.B. Heckspoiler, Regenrinnen und Stoßfänger sowie als Laufrollen Schiebehimmel sowie Türinnenverkleidungen bei Automobilen. Kompakte Elastomere besitzen Dichten von ungefähr 1,0 bis 1,1 g/cm³, wobei die füllstoffhaltigen und/oder Verstärkungsmittelhaltigen Produkte Dichten bis zu 2,0 g/cm³ und mehr aufweisen können. Kompakte Formkörper dieser Art eignen sich beispielsweise in der Automobilindustrie als Sitzwanne, Reserveradmulde oder Motorspritzschutz.

Die nach dem erfindungsgemäßen Verfahren hergestellten weichelastischen, halbharten und harten Polyurethan-Formschaumstoffe sowie die entsprechenden Polyurethan-Integralschaumstoff-Formkörper weisen eine Dichte von 0,025 bis 0,75 g/cm³ auf, wobei die Dichten der PU-Formschaumstoffe vorzugsweise 0,03 bis 0,24 g/cm³ und insbesondere 0,03 bis 0,1 g/cm³ und die Dichten der PU-Integralschaumstoff-Formkörper vorzugsweise 0,08 bis 0,75 g/cm³ und insbesondere 0,24 bis 0,6 g/cm³ betragen. Die PU-Schaumstoffund PU-Integralschaumstoff-Formkörper werden z.B. verwendet in der Fahrzeug-, z.B. Automobil-, Flugzeug- und Schiffbauindustrie, der Möbel- und Sportartikelindustrie als beispielsweise Polstermaterialien, z.B. Auto-, Motorrad- oder Traktorensitze, als Kopfstützen, Verkleidungselemente, Gehäuseteile, Konsolen, Skikern, Ski-innenschutz, Dachrahmen und Fertighimmel in Verkehrsmitteln und Fensterrahmen.

Die Erfindung soll an nachfolgenden Beispielen näher erläutert werden.

### Beispiel 1

Herstellung von zelligen, flächigen, mit Glasmatten verstärkten Polyurethan-Formkörpern

### A-Komponente:

| | | |
|---|---|---|
| 56,2 | Gew.-Teile | eines Polyoxypropylen-polyols mit der Hydroxylzahl von 490, hergestellt durch Propoxylierung einer Startermischung aus Sucrose und Glycerin im Gewichtsverhältnis 60:40, |
| 4,5 | Gew.-Teile | Glycerin, |
| 7 | Gew.-Teile | eines mit Pentaerythrit gestarteten Polyoxyethylen-polyols mit der Hydroxylzahl 630, |
| 1,8 | Gew.-Teile | Wasser, |
| 0,9 | Gew.-Teile | eines Stabilisators auf Silikon-Basis (Stabilisator OS 340 der Bayer AG, BRD), |
| 1,0 | Gew.-Teile | 1-Methylimidazol, |
| 0,8 | Gew.-Teile | Dimethyliminocyclohexan, |
| 20,0 | Gew.-Teile | eines monomeren Alkylepoxystearats (Edenol B35 der Fa. Henkel), |
| 6,0 | Gew.-Teile | eines inneren Trennmittels, hergestellt durch Umsetzung von einem Mol Polyisobutylenbernsteinsäureanhydrid mit einem mittleren Molekulargewicht Mₙ (Zahlenmittel) des Polyisobutylenrestes von 1000 und einem Mol eines Esters aus Ölsäure/ Adipinsäure/Pentaerythrit mit einer OH-Zahl von 20 und einer Säurezahl von 23 mg KOH/g. Die Umsetzung erfolgte während 4 Stunden bei 110°C unter Stickstoffspülung. Als Lösungsmittel wurde Edenol B33 verwendet. Nach Abkühlung erhält man eine niedrigviskose Flüssigkeit des Halbesters in Edenol B35 (Gew.-Verhältnis 1:1) mit den Kenndaten: Säurezahl: 13,7 mg KOH/g. Das Trennmittel zeigte im IR-Spektrum bei 1737 cm⁻¹ eine ausgeprägte Esterbande, |
| 1,8 | Gew.-Teile | Schwarzpaste der Fa. ISL, BRD. |

### B-Komponente

Mischung aus Diphenylmethan-diisocyanaten und Polyphenyl-polymethylen-polyisocyanaten mit einem NCO-Gehalt von 31 Gew.-% (Roh-MDI). Das Mischungsverhältnis betrug 100:131,1.

Die Handzeiten betrugen frei geschäumt bei 25°C

| | |
|---|---|
| Startzeit | 26 Sekunden |
| Steigzeit | 70 Sekunden |

Das freigeschäumte Raumgewicht betrug 79,5 g/l.

Die mit Glasmatten verstärkte Formplatten wurden hergestellt auf einer Hochdruckdosieranlage vom Typ ®Puromat 30, der Elastogran-Maschinenbau, Straßlach bei München, nach der RIM-Technik in einem auf 56°C temperierten metallischen Formwerkzeug mit den inneren Abmessungen 4 x 60 x 300 mm, das zu Beginn der Versuchsreihe einmal mit dem äußeren Trennmittel LS 1000 der Firma Klüber Chemie AG, BRD, behandelt wurde. In das Formwerkzeug eingelegt wurden handelsübliche Glasmatten mit einem Flächengewicht von 450 bis 600 g/m².

100 Gew.-Teile der A-Komponente und 130 Gew.-Teile der B-Komponente, die jeweils eine Temperatur von 25°C besaßen, wurden nach dem RIM-Verfahren auf der vorgenannten Hochdruckdosieranlage gemischt und in das geschlossene, Glasmatten enthaltende Formwerkzeug eingespritzt.

Der Druck der A-Komponente betrug 170 bar und der der B-Komponente 200 bar. Die Schußzeit betrug 2 Sekunden.

Die Formplatte wurde nach 120 Sekunden entformt. Sie besaß eine Dichte von 0,9 g/cm³ und bei Verwendung einer Glasmatte von 600 g/m² einen Glasgehalt von 20 Gew.-%.

Nachdem 65 Formplatten problemlos entformt werden konnten, wurde die Versuchsserie abgebrochen.

Die glasfaserverstärkten Polyurethanplatten werden anschließend mit einem konventionellen Halb-Hart-Schaum hinterschäumt, um die Haftung zu prüfen. Selbst nach 78 Stunden war die Haftung noch vorhanden.

### Beispiel 2

Herstellung von harten Polyurethan-Integralschaumstoff-Formkörpern

### A-Komponente

| | | |
|---|---|---|
| 45,0 | Gew.-Teile | eines mit Trimethylolpropan gestarteten Polyoxypropylenpolyols mit der OH-Zahl 860, |
| 10 | Gew.-Teile | eines Polyoxypropylen-polyols mit der Hydroxylzahl von 400 und einer Funktionalität von 4,3, hergestellt unter Verwendung einer Startermischung aus Sucrose, Glycerin und Wasser, |
| 24 | Gew.-Teile | eines mit 1,2-Propandiol gestarteten Polyoxypropylen-polyols mit einer Funktionalität von 2 und einer OH-Zahl von 56, |
| 1,1 | Gew.-Teile | Zusatzmittel SM der Bayer AG, BRD, |
| 1,0 | Gew.-Teile | Silicon DG 193 der Fa. DOW Coming, |
| 0,2 | Gew.-Teile | Phosphorsäure. |
| 1,1 | Gew.-Teile | Bis-(Dimethylamino-N-propyl)methylamin, |
| 0,3 | Gew.-Teile | 1-Methylimidazol, |
| 10,0 | Gew.-Teile | eines mit Glycerin gestarteten Polyoxypropylen-polyols mit der Hydroxylzahl 400, |
| 6,0 | Gew.-Teile | des Trennmittels aus Beispiel 1. |

### B-Komponente

Mischung aus Diphenylmethan-diisocyanaten und Polyphenylpolymethylen-polyisocyanaten mit einem NCO-Gehalt von 31 Gew.-% (Roh-MDI). Das Mischungsverhältnis betrug 100:148,31.

Die Handzeiten betrugen freigeschäumt bei 20°C

| | |
|---|---|
| Startzeit | 42 Sekunden |
| Abbindezeit | 72 Sekunden |
| Steigzeit | 80 Sekunden |
| RG (freigeschäumt) | 184 g/l |

Die Maschinenzeiten betrugen

| | |
|---|---|
| Startzeit | 13 Sekunden |
| Abbindezeit | 35 Sekunden |
| Steigzeit | 42 Sekunden |
| RG (Maschine) | 175 g/l |

Die harten Polyurethan-Integralschaumstoff-Werkstoffe wurden hergestellt auf einer Hochdruckdosieranlage vom Typ ®Puromat 30, der Elastogran-Maschinenbau, Straßlach bei München, nach der RIM-Technik in einer aus Aluminium bestehenden Spoiler-Form, welche auf 50°C temperiert war. Der Druck der A- und B-Komponente betrug 150 bar. Die Luftbeladung betrug 20 %. Die Entformzeit betrug 3 Minuten. Die Form wurde vor Versuchsbeginn mit einem üblichen wachshaltigen Trennmittel Acmosil 35-3053 H, Fa. Acmos. Anschließend wurden 50 Spoiler ohne zusätzliches Trennmittel hergestellt.

### Beispiel 3

### A-Komponente

| | | |
|---|---|---|
| 36,2 | Gew.-Teile | eines Polyols, welches gemäß EP 0 554 590 durch Ringöffnung von epoxydiertem Sojabohnenöl mit Glykol hergestellt wurde mit einer OH-Zahl von 253 |
| 28,8 | Gew.-Teile | Rizinusöl mit der OH-Zahl von 160 |
| 26,8 | Gew.-Teile | eines mit Glycerin gestarteten Polyoxypropylen-polyols mit der OH-Zahl von 555, wobei als Katalysator Bortrifluorid-Etherat verwendet wurde, |
| 1,0 | Gew.-Teile | Wasser |
| 0,2 | Gew.-Teile | Dabco 8154 der Fa. Air Products , |
| 1,0 | Gew.-Teile | eines Emulgators gemäß Beispiel 12 der US-Patentschrift 5 106 875, |
| 6 | Gew.-Teile | eines inneren Trennmittels, hergestellt durch Veresterung von 1 Mol Polyisobutylenbernsteinsäureanhydrid mit einem mittleren Molekulargewicht Mn des Polyisobutylenrests von 1000 mit 2 Molen eines mit Trimethylolpropan gestarteten Polyoxypropylen(86 Gew.-%)-polyoxyethylen(14 Gew.%)triols mit der Hydroxylzahl 26, welches 1:1 mit einem Polyoxypropylenpolyol, welches mit 1,2-Propandiol gestartet wurde und eine OH-Zahl von 105 besaß, abgemischt wurde. |

Die Formkörper wurden hergestellt auf einer Hochdruckdosieranlage vom Typ ®Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Komponente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

### Beispiel 4

Das Beispiel wurde analog Beispiel 3 durchgeführt. Als Trennmittel wurden 6 Gew.-Teile des Copolymerisates gemäß WO/07944, Beispiel 1.1, Seite 9, eingesetzt. Nach 50 Entfernungen wurde die Versuchsserie abgebrochen.

### Beispiel 5

Das Beispiel wurde analog Beispiel 1 durchgeführt. Das innere Trennmittel wurde hergestellt durch Umsetzung von einem Mol Polyisobutylenbernsteinsäureanhydrid (PIBSA) mit einem mittleren Molekulargewicht Mₙ (Zahlenmittel) des Polyisobutylenrestes von 1000 und 1 Mol eines Esters aus Sobitan-monooleat. Die beiden Einsatzstoffe wurden in einem Rundkolben unter Stickstoffatmosphäre 3 Stunden bei 130-140°C Innentemperatur gerührt. Das Endprodukt besaß eine OH-Zahl von 17 mg KOH/g und eine Säurezahl von 32 mg KOH/g. Es wurde in einer Menge von 5 Gew.-Teilen, bezogen auf die Polyolkomponente, eingesetzt.

Nach der Herstellung von 85 120 cm langen glasfaserverstärkten Platten wurde die Versuchsreihe abgebrochen. Nach Hinterschäumung der Platten mit einem Halb-Hart-Schaum war die Haftung nach 120 Stunden noch ausgezeichnet.

### Beispiel 6

### A-Komponente:

| | | |
|---|---|---|
| 58,6 | Gew.-Teile | eines Polyoxypropylen-polyols mit der Hydroxylzahl von 490, hergestellt durch Propoxylierung einer Startermischung aus Sucrose und Glycerin im Gewichtsverhältnis 60 : 40 |
| 20,0 | Gew.-Teile | eines hydroxylgruppenhaltigen Alkylenoxidstearats zur Verbesserung der Fließfähigkeit (®Edenor B33 der Firma Henkel, BRD) |
| 4,5 | Gew.-Teile | Glycerin |
| 3,8 | Gew.-Teile | Schwarzpaste der Firma ISL-Köln |
| 4,0 | Gew.-Teile | eines mit Pentaerythrit gestarteten Polyoxyethylen-polyols mit der Hydroxylzahl 630 |
| 0,8 | Gew.-Teile | Dimethylaminocyclohexan |
| 1,4 | Gew.-Teile | Wasser |
| 0,9 | Gew.-Teile | eines Stabilisators auf Silikonbasis |
| | | (Stabilisator OS 340 der BAYER AG, BRD) |
| 1,0 | Gew.-Teile | 1-Methylimidazol |
| 5,0 | Gew.-Teile | eines inneren Trennmittels, hergestellt durch Veresterung von 0,1 Mol Polyisobutylenbernsteinsäureanhydrid mit einem mittleren Molekulargewicht Mₙ des Polyisobutylenrests von 1000 mit 0,1 Mol "Kraton Liquid® L-1203 Polymer" der Fa. Shell Chemicals mit einer Hydroxylzahl von 15 mg KOH/g. Das Umsetzungsprodukt hatte eine Säurezahl von 10,0 mg KOH/g. Die Herstellung erfolgte in einem Dreihalskolben bei 145°C, während 4 Stunden. |

Die Formkörper wurden hergestellt auf einer Hochdruckdosieranlage vom Typ ®Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Komponente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

### B-Komponente: Wie Beispiel 1

### Beispiel 7

### A-Komponente:

| | | |
|---|---|---|
| 58,6 | Gew.-Teile | eines Polyoxypropylen-polyols mit der Hydroxylzahl von 490, hergestellt durch Propoxylierung einer Startermischung aus Sucrose und Glycerin im Gewichtsverhältnis 60 : 40 |
| 20,0 | Gew.-Teile | eines hydroxylgruppenhaltigen Alkylenoxidstearats zur Verbesserung der Fließfähigkeit (®Edenor B33 der Firma Henkel, BRD) |
| 4,5 | Gew.-Teile | Glycerin |
| 3,8 | Gew.-Teile | Schwarzpaste der Firma ISL - Köln |
| 4,0 | Gew.-Teile | eines mit Pentaerythrit gestarteten Polyoxyethylenpolyols mit der Hydroxylzahl 630 |
| 0,8 | Gew.-Teile | Dimethylaminocyclohexan |
| 1,4 | Gew.-Teile | Wasser |
| 0,9 | Gew.-Teile | eines Stabilisators auf Silikonbasis (Stabilisator OS 340 der BAYER AG, BRD) |
| 1,0 | Gew.-Teile | 1 -Methylimidazol |
| 5,0 | Gew.-Teile | eines inneren Trennmittels, hergestellt durch Veresterung von 0,05 Mol MSA/Polyisobutylen -Copolymer mit einem mittleren Molekulargewicht Mn des Polyisobutylenrests von 1000 mit 0, 1 Mol "Kraton Liquid® L- 1203 Polymer" der Fa. Shell Chemicals mit einer Hydroxylzahl von 15 mg KOH/g. Das Umsetzungsprodukt hatte eine Säurezahl von 17,1 mg KOH/g. Die Herstellung erfolgte in einem Dreihalskolben bei 145°C, während 4 Stunden. |

Die Formkörper wurden hergestellt auf einer Hochdruckdosieranlage vom Typ ®Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Komponente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

### B-Komponente: Wie Beispiel 1

### Beispiel 8

### A-Komponente:

| | | |
|---|---|---|
| 58,6 | Gew.-Teile | eines Polyoxypropylen-polyols mit der Hydroxylzahl von 490, hergestellt durch Propoxylierung einer Startermischung aus Sucrose und Glycerin im Gewichtsverhältnis 60 : 40 |
| 20,0 | Gew.-Teile | eines hydroxylgruppenhaltigen Alkylenoxidstearats zur Verbesserung der Fließfähigkeit (®Edenor B33 der Firma Henkel, BRD) |
| 4,5 | Gew.-Teile | Glycerin |
| 3,8 | Gew.-Teile | Schwarzpaste der Firma ISL - Köln |
| 4,0 | Gew.-Teile | eines mit Pentaerythrit gestarteten Polyoxyethylenpolyols mit der Hydroxylzahl 630 |
| 0,8 | Gew.-Teile | Dimethylaminocyclohexan |
| 1,4 | Gew.-Teile | Wasser |
| 0,9 | Gew.-Teile | eines Stabilisators auf Silikonbasis (Stabilisator OS 340 der BAYER AG, BRD) |
| 1,0 | Gew.-Teile | 1 -Methylimidazol |
| 5,0 | Gew.-Teile | eines inneren Trennmittels, hergestellt durch Veresterung von 0,2 Mol Polyisobutylenbernsteinsäureanhydrid mit 0,1 Mol Mol "Kraton Liquid® L 2203 Polymer" der Fa. Shell Chemicals mit einem Hydroxiäquivalentgewicht von 1800. Die Herstellung erfolgte in einem Dreihalskolben bei 145 °C, während 4 Stunden. |

Die Formkörper wurden hergestellt auf einer Hochdruckdosieranlage vom Typ ®Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Kompoi nente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

### B-Komponente: Wie Beispiel 1

### Beispiel 9

### A-Komponente:

| | | |
|---|---|---|
| 58,6 | Gew.-Teile | eines Polyoxypropylen-polyols mit der Hydroxylzahl von 490, hergestellt durch Propoxylierung einer Startermischung aus Sucrose und Glycerin im Gewichtsverhältnis 60 : 40 |
| 20,0 | Gew.-Teile | eines hydroxylgruppenhaltigen Alkylenoxidstearats zur Verbesserung der Fließfähigkeit (®Edenor B33 der Firma Henkel, BRD) |
| 4,5 | Gew.-Teile | Glycerin |
| 3,8 | Gew.-Teile | Schwarzpaste der Firma ISL - Köln |
| 4,0 | Gew.-Teile | eines mit Pentaerythrit gestarteten Polyoxyethylenpolyols mit der Hydroxylzahl 630 |
| 0,8 | Gew.-Teile | Dimethylaminocyclohexan |
| 1,4 | Gew.-Teile | Wasser |
| 0,9 | Gew.-Teile | eines Stabilisators auf Silikonbasis (Stabilisator OS 340 der BAYER AG, BRD) |
| 1,0 | Gew.-Teile | 1-Methylimidazol |
| 5,0 | Gew.-Teile | eines inneren Trennmittels, hergestellt durch Veresterung von 0,1 Mol Polyisobutylenbernsteinsäureanhydrid mit 0,1 Mol Mol "Kraton Liquid® Polymer" EKP 207 der Fa. Shell Chemicals mit einem Hydroxiäquivalentgewicht von 6000. Die Herstellung erfolgte in einem Dreihalskolben bei 145°C, während 4 Stunden. |

Die Formkörper wurden hergestellt auf einer Hochdruckdosieranlage vom Typ ®Puromat 30 nach der RIM-Technik in einem auf 60°C temperierten Aluminiumformwerkzeug mit den inneren Abmessungen 4 x 250 x 300 mm.

100 Gew.-Teile der A-Komponente und 140,6 Gew.-Teile der B-Komponente, die jeweils eine Temperatur von 30°C besaßen, wurden nach der RIM-Technik auf der in Beispiel 1 genannten Hochdruckdosieranlage gemischt und in das geschlossene Formwerkzeug eingespritzt.

Der Druck der A- und B-Komponente betrug 150 bis 200 bar, bei einer Luftbeladung der A-Komponente von 40 Vol-%. Die Schußzeit betrug 2 Sekunden.

Die Formplatte wurde nach 90 Sekunden entformt. Sie besaß eine Dichte von 1,15 g/cm³.

Nach der Herstellung von 20 Formplatten, die problemlos entformt werden konnten, wurde die Versuchsreihe abgebrochen.

B-Komponente: Wie Beispiel 1

## Patentansprüche

1. Verfahren zur Herstellung von selbsttrennenden, kompakten oder zelligen, gegebenenfalls Verstärkungsmittel enthaltenden Formkörpern aus Polyisocyanat-Polyadditionsprodukten durch Umsetzung von
a) organischen und/oder modifizierten organischen Polyisocyanaten mit
b) mindestens einer Verbindung mit mindestens zwei reaktiven Wasserstoffatomen und einem Molekulargewicht von 62 bis 10.000 und gegebenenfalls
c) Kettenverlängerungs- und/oder Vernetzungsmitteln
in Gegenwart von
d) inneren Formtrennmitteln
und in Gegenwart oder Abwesenheit von
e) Katalysatoren,
f) Treibmitteln,
g) Verstärkungsmitteln und
h) Hilfsmitteln
in einem offenen oder geschlossenen Formwerkzeug, dadurch gekennzeichnet, daß man als innere Trennmittel (d) Alkylbernsteinsäureester und/oder -halbester und/oder Alkenylbernsteinsäureester und/oder -halbester verwendet.

2. Verfahren nach Anspruch 1, dadurch gekennzeichnet, daß die Alkyl- oder Alkenylgruppen der Alkyl- oder Alkenylbernsteinsäureester oder -halbester ein mittleres Molekulargewicht (Zahlenmittel) Mₙ von 250 bis 3.000 besitzen.

3. Verfahren nach Anspruch 1 oder 2, dadurch gekennzeichnet, daß die Alkylgruppen linear oder verzweigt sind und aus Polyisopropylen- oder Polyisobutylenresten bestehen und die Alkenylgruppen aus Polyethenyl-, Polyisopropenyl- oder Polyisobutenylresten bestehen.

4. Verfahren nach einem der Ansprüche 1 bis 3, dadurch gekennzeichnet, daß als Olefine für den Aufbau der Alkylgruppen Oligomere des Propens und/oder mindestens eines verzweigten 1-Olefins mit 4 bis 10 Kohlenstoffatomen eingesetzt werden, die mindestens 3 Olefineinheiten und ein mittleres Molekulargewicht (M_{w}) von 300 bis 3000 g/mol aufweisen.

5. Verfahren nach Anspruch 1, dadurch gekennzeichnet, daß die Alkyl- und/oder Alkenylbernsteinsäuren herstellbär sind durch Polymerisation von
a) 20 bis 60 mol-% Maleinsäure oder deren Anhydrid,
b) 10 bis 70 mol-% mindestens eines Oligomeren des Propens oder eines verzweigten 1-Olefins mit 4 bis 10 Kohlenstoffatomen und einem mittleren Molekulargewicht M_{w} von 300 bis 5000 und
c) 1 bis 50 mol-% mindestens einer monoethylenisch ungesättigten Verbindung, die mit den Monomeren a) und b) copolymerisierbar ist.

6. Verfahren nach Anspruch 5, dadurch gekennzeichnet, daß das Monomer c) ausgewählt ist aus der Gruppe, enthaltend
- monoethylenisch ungesättigte C₃-C₁₀-Monocarbonsäuren
- lineare 1-Olefine mit 2 bis 40 Kohlenstoffatomen
- Vinyl- und Alkylallylether mit 1 bis 40 Kohlenstoffatomen im Alkylrest.

7. Verfahren nach einem der Ansprüche 1 bis 6, dadurch gekennzeichnet, daß die Alkyl- oder Alkenylbernsteinsäureester oder -halbester hergestellt werden durch Umsetzung von Alkylbernsteinsäure oder -derivaten oder Alkenylbernsteinsäure oder -derivaten mit primären und/oder sekundären organischen Mono- und/oder Polyalkoholen.

8. Verfahren nach einem der Ansprüche 1 bis 7, dadurch gekennzeichnet, daß die Alkyl- oder Alkenylbernsteinsäureester oder -halbester hergestellt werden durch Umsetzung von Alkyl- oder Alkenylbernsteinsäureanhydrid mit aliphatischen Mono- und/oder Polyolen.

9. Verfahren nach einem der Ansprüche 1 bis 8, dadurch gekennzeichnet, daß die Alkyl- oder Alkenylbernsteinsäureester und/oder -halbester hergestellt werden durch Umsetzung von Alkyl- und/oder Alkenylbernsteinsäure und/oder -derivaten mit Mono- oder Polyolen ausgewählt aus der Gruppe (A)
a) Alkanole mit bis 40 Kohlenstoffatomen
b) Polyetherpolyole
c) Polyesterpolyole
d) Hydroxylgruppenhaltige Naturstoffe
e) Ester aus mindestens 3-funktionellen Alkoholen und Fettsäuren, bei denen mindestens eine Hydroxylgruppe frei ist
f) Aminoalkohole und/oder Polyole, welche nur tertiäre Aminogruppen enthalten.

10. Verfahren nach einem der Ansprüche 1 bis 9, dadurch gekennzeichnet, daß man die Alkylbernsteinsäureester, -halbester, Alkenylbernsteinsäureester oder -halbester oder Mischungen aus mindestens zwei der genannten Ester oder -halbester oder Mischungen aus Estern und Halbestern in einer Menge von 0,2 bis 15 Gew.-Teilen pro 100 Gew.-Teilen der Komponente (b) verwendet.

11. Verfahren nach einem der Ansprüche 1 bis 10, dadurch gekennzeichnet, daß die Kettenverlängerungs- oder Vernetzungsmittel ein Molekulargewicht von kleiner als 500 besitzen.

12. Verfahren gemäß Anspruch 1, 5 und 6, dadurch gekennzeichnet, daß als innere Formtrennmittel Umsetzungsprodukte aus Polyisobutylenbernsteinsäureanhydrid und/oder Polyisobutylenbernsteinsäureanhydrid und/oder Copolymerisate mit einem
Alkohol (A) eingesetzt werden.

13. Verfahren gemäß Anspruch 1, 5 und 6, dadurch gekennzeichnet, daß als innere Trennmittel Umsetzungsprodukte aus Polyisobutylenbernsteinsäureanhydrid und/oder Copolymerisaten mit einer Kombination aus einem Alkohol (A) und einem Amin (B), welches mindestens eine 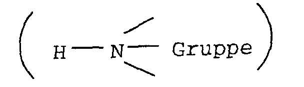 aufweist, eingesetzt werden.

14. Verfahren nach Anspruch 1 bis 13, dadurch gekennzeichnet, daß die Alkyl- und/oder Alkenylbernsteinsäureester und/oder -halbester nach ihrer Herstellung mit Boroxid, Boroxidhydrat, Borsäure, Borsäureester, Schwefel, Phosphoroxiden, Epoxiden, Episulfiden, Aminen und/oder Erdalkalimetallsalzen behandelt werden.

15. Verfahren nach einem der Ansprüche 1 bis 11, dadurch gekennzeichnet, daß die Verstärkungsmittel g) aus Fasern oder Gelegen, Geweben, Matten, Filzen oder Vliesen auf der Grundlage von Glas-, Kohlenstoff-, Metall-, Kunststoff- und/oder Naturfasern bestehen.

16. Verwendung von Alkyl- und/oder Alkenylbernsteinsäureestern und/oder -halbestern oder Mischungen aus mindestens zwei der -ester und/oder -halbester als innere Formtrennmittel zur Herstellung von Formkörpern aus Polyisocyanat-Polyadditionsprodukten.

## Claims

1. A process for producing self-releasing, compact or cellular moldings which comprise polyisocyanate polyaddition products and may contain reinforcing material by reacting
a) organic and/or modified organic polyisocyanates with
b) at least one compound containing at least two reactive hydrogen atoms and having a molecular weight of from 62 to 10,000 and, if desired,
c) chain extenders and/or crosslinkers
in the presence of
d) internal mold release agents
and in the presence or absence of
e) catalysts,
f) blowing agents,
g) reinforcing materials and
h) auxiliaries
in an open or closed mold, wherein the internal mold release agents (d) used are diesters and/or monoesters of alkylsuccinic acids and/or diesters and/or monoesters of alkenylsuccinic acids.

2. A process as claimed in claim 1, wherein the alkyl or alkenyl groups of the alkylsuccinic or alkenylsuccinic diesters or monoesters have a mean molecular weight (number average) Mₙ of from 250 to 3000.

3. A process as claimed in claim 1 or 2, wherein the alkyl groups are linear or branched and comprise polyisopropylene or polyisobutylene radicals and the alkenyl groups comprise polyethenyl, polyisopropenyl or polyisobutenyl radicals.

4. A process as claimed in any of claims 1 to 3, wherein olefins used for building up the alkyl groups are oligomers of propene and/or at least one branched 1-olefin having from 4 to 10 carbon atoms and contain at least 3 olefin units and have a mean molecular weight (M_{w}) of from 300 to 3000 g/mol.

5. A process as claimed in claim 1, wherein the alkylsuccinic and/or alkenylsuccinic acids can be prepared by polymerization of
a) from 20 to 60 mol% of maleic acid or its anhydride,
b) from 10 to 70 mol% of at least one oligomer of propene or a branched 1-olefin having from 4 to 10 carbon atoms, having a mean molecular weight M_{w} of from 300 to 5000, and
c) from 1 to 50 mol% of at least one monoethylenically unsaturated compound which can be copolymerized with the monomers a) and b).

6. A process as claimed in claim 5, wherein the monomer c) is selected from the group consisting of
- monoethylenically unsaturated C₃-C₁₀-monocarboxylic acids
- linear 1-olefins having from 2 to 40 carbon atoms
- vinyl and alkyl allyl ethers having from 1 to 40 carbon atoms in the alkyl radical.

7. A process as claimed in any of claims 1 to 6, wherein the alkylsuccinic or alkenylsuccinic diesters or monoesters are prepared by reacting alkylsuccinic acid or derivatives or alkenylsuccinic acid or derivatives with primary and/or secondary organic monoalcohols and/or polyalcohols.

8. A process as claimed in any of claims 1 to 7, wherein the alkylsuccinic or alkenylsuccinic diesters or monoesters are prepared by reacting alkylsuccinic or alkenylsuccinic anhydride with aliphatic monools and/or polyols.

9. A process as claimed in any of claims 1 to 8, wherein the alkylsuccinic or alkenylsuccinic diesters and/or monoesters are prepared by reacting alkylsuccinic and/or alkenylsuccinic acid and/or derivatives with monools or polyols selected from the group (A) consisting of
a) alkanols having up to 40 carbon atoms
b) polyether polyols
c) polyester polyols
d) hydroxyl-containing natural materials
e) esters of at least trifunctional alcohols and fatty acids, in which esters at least one hydroxyl group is free
f) aminoalcohols and/or polyols containing only tertiary amino groups.

10. A process as claimed in any of claims 1 to 9, wherein the alkylsuccinic diesters or monoesters, alkenylsuccinic diesters or monoesters or mixtures of at least two of the diesters or monoesters mentioned or mixtures of diesters and monoesters are used in an amount of from 0.2 to 15 parts by weight per 100 parts by weight of the component (b).

11. A process as claimed in any of claims 1 to 10, wherein the chain extenders or crosslinkers have a molecular weight of less than 500.

12. A process as claimed in any of claims 1, 5 and 6, wherein internal mold release agents used are reaction products of polyisobutylenesuccinic anhydride and/or polyisobutylenesuccinic anhydride and/or copolymers with an alcohol (A).

13. A process as claimed in any of claims 1, 5 and 6, wherein internal mold release agents used are reaction products of polyisobutylenesuccinic anhydride and/or copolymers with a combination of an alcohol (A) and an amine (B) which contains at least one

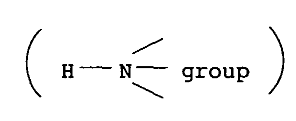

14. A process as claimed in any of claims 1 to 13, wherein the alkylsuccinic and/or alkenylsuccinic diesters and/or monoesters are treated after their preparation with boron oxide, hydrated boron oxide, boric acid, boric esters, sulfur, phosphorus oxides, epoxides, episulfides, amines and/or alkaline earth metal salts.

15. A process as claimed in any of claims 1 to 11, wherein the reinforcing materials g) comprise fibers or lay-ups, woven fabrics, mats, felts or nonwovens based on glass, carbon, metal, polymer and/or natural fibers.

16. Use of alkylsuccinic and/or alkenylsuccinic diesters and/or monoesters or mixtures of at least two of these diesters and/or monoesters as internal mold release agents for producing moldings comprising polyisocyanate polyaddition products.

## Revendications

1. Procédé pour la production de corps moulés compacts ou alvéolaires, auto-démoulables, contenant le cas échéant des agents de renforcement, constitués par des produits de polyaddition de polyisocyanates, par mise en réaction
a) des polyisocyanates organiques et/ou organiques modifiés avec
b) au moins un composé comprenant au moins deux atomes d'hydrogène réactifs et possédant un poids moléculaire de 62 à 10.000 et, le cas échéant,
c) des agents d'allongements de chaînes et/ou des agents de réticulation,
en présence
d) des agents de démoulage internes
et en présence ou en l'absence
e) des catalyseurs,
f) des agents moussants,
g) des agents de renforcement, et
h) des adjuvants
dans un moule ouvert ou fermé, caractérisé en ce qu'on utilise, à titre d'agents de démoulage internes (d), des esters et/ou des demi-esters alkylsucciniques et/ou des esters et/ou des demi-esters alcényl-succiniques.

2. Procédé selon la revendication 1, caractérisé en ce que les groupes alkyle ou les groupes alcényle des esters ou des demi-esters alkyl- ou alcényl-succiniques possèdent un poids moléculaire moyen (moyenne en nombre) Mₙ de 250 à 3.000.

3. Procédé selon la revendication 1 ou 2, caractérisé en ce que les groupes alkyle sont linéaires ou ramifiés et sont constitués par des radicaux de polyisopropylène ou de polyisobutylène et les groupes alcényle sont constitués par des radicaux polyéthényle, polyisopropényle ou polyisobutényle.

4. Procédé selon l'une quelconque des revendications 1 à 3, caractérisé en ce qu'on met en oeuvre, à titre d'oléfines pour l'édification des groupes alkyle, des oligomères du propène et/ou d'au moins une 1-oléfine ramifiée contenant de 4 à 10 atomes de carbone, qui présentent au moins 3 unités d'oléfines et un poids moléculaire moyen (M_{w}) de 300 à 3000 g/mole.

5. Procédé selon la revendication 1, caractérisé en ce que les acides alkyl- et/ou alcénylsucciniques peuvent être préparés par polymérisation de
a) l'acide maléique ou son anhydride, à concurrence de 20 à 60 moles %,
b) au moins un oligomère du propène ou d'une 1-oléfine ramifiée contenant de 4 à 10 atomes de carbone et possédant un poids moléculaire moyen M_{w} de 300 à 5000, à concurrence de 10 à 70 moles %, et
c) au moins un composé à insaturation monoéthylénique qui peut être copolymérisé avec les monomères a) et b), à concurrence de 1 à 50 moles %.

6. Procédé selon la revendication 5, caractérisé en ce que le monomère c) est choisi parmi le groupe contenant
- des acides monocarboxyliques en C₃-C₁₀ à insaturation monoéthylénique,
- des 1-oléfines linéaires contenant de 2 à 40 atomes de carbone,
- des éthers vinyliques et alkylallyliques contenant de 1 à 40 atomes de carbone dans le radical alkyle.

7. Procédé selon l'une quelconque des revendications 1 à 6, caractérisé en ce qu'on prépare les esters ou les demi-esters alkyl- ou alcényl-succiniques par mise en réaction d'acides alkylsucciniques ou de leurs dérivés ou d'acides alcénylsucciniques ou de leurs dérivés avec des monoalcools et/ou des polyols organiques primaires et/ou secondaires.

8. Procédé selon l'une quelconque des revendications 1 à 7, caractérisé en ce qu'on prépare les esters ou les demi-esters alkyl- ou alcényl-succiniques par mise en réaction d'anhydrides alkyl- ou alcényl-succiniques avec des monoalcools et/ou des polyols aliphatiques.

9. Procédé selon l'une quelconque des revendications 1 à 8, caractérisé en ce qu'on prépare les esters ou les demi-esters alkyl- ou alcényl-succiniques par mise en réaction d'acides alkyl- et/ou alcényl-succiniques et/ou de leurs dérivés avec des monoalcools et/ou des polyols choisis parmi le groupe (A) comprenant
a) des alcanols contenant jusqu'à 40 atomes de carbone,
b) des polyéther-polyols,
c) des polyester-polyols,
d) des substances naturelles contenant des groupes hydroxyle,
e) des esters obtenus à partir d'alcools au moins trifonctionnels et à partir d'acides gras, dans lesquels au moins un groupe hydroxyle est libre,
f) des aminoalcools et/ou des polyols qui ne contiennent que des groupes amino tertiaires.

10. Procédé selon l'une quelconque des revendications 1 à 9, caractérisé en ce qu'on utilise les esters ou les demi-esters alkylsucciniques, les esters ou les demi-esters alcénylsucciniques, ou des mélanges d'au moins deux des esters ou des demi-esters mentionnés ou encore des mélanges d'esters et de demi-esters en une quantité de 0,2 à 15 parties en poids par 100 parties en poids du composant (b).

11. Procédé selon l'une quelconque des revendications 1 à 10, caractérisé en ce que les agents d'allongement de chaîne ou les agents de réticulation possèdent un poids moléculaire inférieur à 500.

12. Procédé selon les revendications 1, 5 et 6, caractérisé en ce qu'on met en oeuvre, à titre d'agents de démoulage internes des produits réactionnels d'anhydride d'acide polyisopropylène-succinique et/ou d'anhydride d'acide polyisobutylène-succinique et/ou de copolymères avec un alcool (A).

13. Procédé selon les revendications 1, 5 et 6, caractérisé en ce qu'on met en oeuvre, à titre d'agents de démoulage internes des produits réactionnels d'anhydride d'acide polyisobutylène-succinique et/ou de copolymères avec une combinaison d'un alcool (A) et d'une amine (B) qui présente au moins un groupe

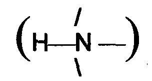

14. Procédé selon les revendications 1 à 13, caractérisé en ce qu'on traite les esters et/ou les demi-esters alkyl- et/ou alcényl-succiniques après leur préparation avec de l'oxyde de bore, de l'oxidhydrate de bore, de l'acide borique, de l'ester borique, du soufre, des oxydes de phosphore, des époxydes, des épisulfures, des amines et/ou des sels de métaux alcalino-terreux.

15. Procédé selon l'une quelconque des revendications 1 à 11, caractérisé en ce que les agents de renforcement (g) sont constitués par des fibres ou par des produits plats, des tissus, des mats, des feutres ou des non-tissés contenant des fibres de verre, des fibres de carbone, des fibres métalliques, des fibres synthétiques et/ou des fibres naturelles.

16. Utilisation d'esters et/ou de demi-esters alkyl- et/ou alcényl-succiniques ou de mélanges d'au moins deux des esters et/ou des demi-esters à titre d'agents de démoulage internes pour la production de corps moulés constitués par des produits de polyaddition de polyisocyanates.
